(19) Europäisches Patentamt
European Patent Office
Office européen des brevets

(11) EP 2 554 588 B1

(12) EUROPEAN PATENT SPECIFICATION

(45) Date of publication and mention of the grant of the patent:
**12.07.2017 Bulletin 2017/28**

(21) Application number: **11765701.5**

(22) Date of filing: **30.03.2011**

(51) Int Cl.:
***C08J 3/09*** *(2006.01)* ***C08L 1/02*** *(2006.01)*
***C08J 5/06*** *(2006.01)* ***C08L 101/00*** *(2006.01)*

(86) International application number:
**PCT/JP2011/058140**

(87) International publication number:
**WO 2011/125801 (13.10.2011 Gazette 2011/41)**

# (54) PROCESS FOR PRODUCTION OF A CELLULOSE FIBER COMPOSITE

VERFAHREN ZUR HERSTELLUNG EINES ZELLULOSEVERBUNDWERKSTOFFS

PROCÉDÉ DE FABRICATION D'UN COMPOSITE DE FIBRE DE CELLULOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2010 JP 2010243046**
**01.04.2010 JP 2010085357**

(43) Date of publication of application:
**06.02.2013 Bulletin 2013/06**

(73) Proprietor: **Mitsubishi Chemical Corporation**
**Chiyoda-ku**
**Tokyo 100-8251 (JP)**

(72) Inventors:
- **SHIMIZU Takanori**
**Kanagawa 227-8502 (JP)**
- **AKAI Hideko**
**Kanagawa 227-8502 (JP)**
- **HIRAI Takayoshi**
**Mie 510-8530 (JP)**
- **OOTA Kazumasa**
**Mie 510-8530 (JP)**

(74) Representative: **Vossius & Partner**
**Patentanwälte Rechtsanwälte mbB**
**Siebertstrasse 3**
**81675 München (DE)**

(56) References cited:
**EP-A1- 2 133 366**
**WO-A1-2010/131602**
**JP-A- 2008 274 200**
**JP-A- 2008 297 364**
**JP-A- 2009 269 992**
**JP-A- 2009 298 972**
**JP-A- 2009 299 043**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 554 588 B1

## Description

### TECHNICAL FIELD

The present invention relates to a method for producing a cellulose fiber composite. More precisely, the invention relates to a method for producing a cellulose fiber composite, which includes fibrillating cellulose fibers in the presence of at least one of a resin and a resin precursor, and also an organic solvent.

### BACKGROUND ART

Recently, composite materials using fine fibers of cellulose such as typically bacterial cellulose have become much studied. Cellulose has a rigid structure derived from the intramolecular hydrogen bond therein, and therefore can provide a composite material having a low linear expansivity when composited with resin or the like.

Up to the present, various studies relating to cellulose-containing composite materials have been made, and for example, Patent References 1 to 3 disclose infiltrating a liquid resin precursor into a nonwoven fabric or gel of cellulose fibers to produce a cellulose fiber/resin composite.

More concretely, for example, in Patent Reference 1, an aqueous dispersion of cellulose fibers is formed into a nonwoven fabric of cellulose fibers through filtration through a Teflon™-made filter membrane, and then an epoxy resin is infiltrated into the nonwoven fabric under a high-temperature condition to produce a composite.

On the other hand, the methods described in these patent references require production of a nonwoven fabric of cellulose fibers or the like prior to composite production therein, and are therefore complicated in the production process therein and are not always industrially satisfactory methods. In addition, in the methods, the composite is produced through infiltration with resin, and therefore it is difficult to control the compositional ratio of resin to cellulose fibers, and is difficult to intentionally produce a composite having desired properties depending on the use thereof. Moreover, the composite to be obtained according to the methods has a layered structure of a resin layer and a cellulose fiber layer, and may therefore have a problem in that the composite would undergo interlayer delamination during heating owing to the difference in the coefficient of linear thermal expansion between the constituent layers.

Under the current situation as above, it is desired to develop a method of producing a composite of cellulose fibers and resin not using a nonwoven fabric or gel of cellulose fibers, and some reports have already been made (Patent References 4 to 6).

Patent Reference 4 discloses use of a fiber-reinforced composite resin composition containing cellulose fibers and a liquid precursor of a matrix resin, as an adhesive or a sealant. Patent Reference 5 discloses a cellulose dispersion with cellulose dispersed in a water-insoluble medium containing a surfactant, indicating production of a composite material that is composited with resin. Patent Reference 6 discloses a method for producing a composite material, using an epoxy resin composition with microfibril cellulose dispersed therein.

### RELATED ART LIST

### PATENT REFERENCES

Patent Reference 1: JP-A 2006-316253
Patent Reference 2: JP-A 2007-165357
Patent Reference 3: JP-A 2008-127510
Patent Reference 4: JP-A 2007-146143
Patent Reference 5: JP-A 2010-13604
Patent Reference 6: JP-A 2010-24413

### SUMMARY OF THE INVENTION

### PROBLEMS TO BE SOLVED BY THE INVENTION

On the other hand, the methods described in Patent References 4 to 6 have the following problems.

In the method described in Patent Reference 4, first, cellulose fibers are fibrillated in water to produce an aqueous solution with cellulose fibers dispersed therein, and then the aqueous solution is mixed with a liquid epoxy resin and water is evaporated away under a low pressure condition to produce a fiber-reinforced composite resin composition.

However, in the method described in Patent Reference 4, cellulose fibers aggregate during evaporation of

water and a part thereof precipitate, and the liquid stability of the obtained composition is not always sufficient. In addition, the obtained composition is poor in film formability, and there still remains room to improve the dispersibility of the cellulose fibers in the composite obtained from the composition.

In the method described in Patent Reference 5, a surfactant is contained in the dispersion and therefore, when the dispersion is composited with cellulose fibers, then the surfactant or water may be mixed in the composite so that an inhomogeneous structure may be formed in the composite and may have some influences on various properties such as the linear expansivity of the composite. In addition, the surfactant may bleed out on the surface of the composite to detract from the properties of the composite.

Patent Reference 6 uses a method that includes ultrasonically redispersing a sheet-like microfibril fiber obtained through substitution with alcohol of an aqueous solution containing cellulose fibers fibrillated in water, again in alcohol, followed by further substitution with epoxy resin from alcohol.

However, in the method described in Patent Reference 6, the cellulose fibers aggregate during substitution with alcohol and a part thereof precipitate, and the liquid stability of the obtained dispersion is not always sufficient. Further, as described in Patent Reference 6, when the content of the microfibril cellulose becomes high in the obtained composite, the dispersibility thereof in a polymer-based matrix material lowers and, as a result, the disclosed method is insufficient in point of the general versatility thereof.

As described above, methods of obtaining a composite by dispersing cellulose fibers in a nonpolar medium or a liquid resin are proposed according to the conventional technology. However, cellulose has multiple hydroxyl groups in the molecular structure thereof therefore forming various types of strong intramolecular or intermolecular hydrogen bonds therein, and consequently, it is difficult to uniformly disperse cellulose in a medium except water (for example, nonpolar medium) or in a liquid resin not using an additive such as surfactant or the like.

In case where a dispersion of microfibrillated cellulose fibers having a nanometer-level fine mean particle size, in which the fibers are uniformly dispersed in an organic solvent except water and which contains a resin or a precursor thereof and is excellent in film formability, could be obtained, a composite of microfibrillated cellulose fibers uniformly dispersed therein could be readily produced and its industrial value would be great.

Given the current situation as above, an object of the present invention is to provide a method for producing a microfibrillated cellulose fiber dispersion capable of giving a composite of microfibrillated cellulose fibers and a resin with high productivity, in which the dispersion contains microfibrillated cellulose fibers uniformly dispersed in an organic solvent and contains at least one of a resin and a resin precursor and is excellent in liquid stability and film formability.

Object of the invention is to provide a method for producing a cellulose fiber composite in which the microfibrillated cellulose fiber dispersion obtained according to the above production method is used.

MEANS FOR SOLVING THE PROBLEMS

The present inventors have assiduously investigated the above-mentioned problems and, as a result, have found that, when cellulose fibers are fibrillated in the presence of at least one of a resin and a resin precursor, and an organic solvent, then the problems can be solved.

Specifically, the inventors have found that the problems can be solved by the following constitution:

1. A method for producing a cellulose fiber composite, which comprises a composite formation step of subjecting a microfibrillated cellulose fiber dispersion, obtained by a fibrillation step of fibrillating cellulose fibers in a starting material dispersion containing cellulose fibers having a number average fiber diameter from 10 $\mu$m to 100 mm, at least one of a resin and a resin precursor, and an organic solvent, to at least one of a heat treatment and photoexposure treatment, to thereby remove the organic solvent and obtain a cellulose fiber composite containing microfibrillated cellulose fibers and a resin.

2. The method for producing a cellulose fiber composite as claimed in item 1, wherein the cellulose fibers are chemically modified cellulose fibers.

3. The method for producing a cellulose fiber composite as claimed in item 1 or 2, wherein the at least one of the resin and the resin precursor is selected from a group consisting of a thermoplastic resin, a thermosetting resin and a photocurable resin, and their precursors.

4. The method for producing a cellulose fiber composite as claimed in any one of items 1 to 3, wherein the at least one of the resin and the resin precursor is at least one of an epoxy resin and its precursor.

5. The method for producing a cellulose fiber composite as claimed in any of items 1 to 4, wherein at least one of a resin and a resin precursor is added to the microfibrillated cellulose fiber dispersion.

6. The method for producing a cellulose fiber composite as claimed in any of items 1 to 5, wherein an organic solvent is added to the microfibrillated cellulose fiber dispersion.

7. The method for producing a cellulose fiber composite as claimed in any one of items 1 to 6, which further comprises an addition step of adding at least one of a resin and a resin precursor to the microfibrillated cellulose fiber dispersion, prior to the composite formation step.

8. A method for producing a cellulose fiber composite containing microfibrillated cellulose fibers and a resin, which comprises:

a fibrillation step of fibrillating cellulose fibers in a starting material dispersion containing cellulose fibers having a number average fiber diameter from 10 μm to 100 mm, at least one of a resin and a resin precursor, and a solvent to obtain microfibrillated cellulose fibers, and
a composite formation step of subjecting the microfibrillated cellulose fibers-containing dispersion to at least one of a heat treatment and photoexposure treatment, to remove the solvent and obtain a cellulose fiber composite containing microfibrillated cellulose fibers and a resin.

ADVANTAGES OF THE INVENTION

The method for producing a microfibrillated cellulose fiber dispersion includes a fibrillation step of fibrillating cellulose fibers in a starting material dispersion containing cellulose fibers, at least one of a resin and a resin precursor, and an organic solvent, thereby giving microfibrillated cellulose fibers. In the method including the fibrillation step, the microfibrillated cellulose fibers can be prevented from re-aggregating and the stability of the dispersion can be thereby enhanced. Therefore, the method solves the problems of aggregation and precipitation of microfibrillated cellulose fibers, and gives a microfibrillated cellulose dispersion where microfibrillated cellulose fibers are uniformly and stably dispersed.
In a preferred embodiment of using an epoxy resin, the hydrogen bond acting between the hydroxyl group in the surfaces of the cellulose fibers and the epoxy group of the epoxy resin can enhance the compatibility between the cellulose fibers and the epoxy resin, in which, therefore, the effect of the invention is remarkable. Further, the microfibrillated cellulose fiber dispersion obtained according to the production method of the invention is excellent in film formability and mold formability.
Concretely, according to the invention, there is provided a method for producing a microfibrillated cellulose fiber dispersion capable of giving a composite of microfibrillated cellulose fibers and a resin with high productivity, in which the dispersion contains microfibrillated cellulose fibers uniformly dispersed in an organic solvent and contains at least one of a resin and a resin precursor and is excellent in liquid stability and film formability. Also according to the invention, there are provided a cellulose fiber composite and its production method using the dispersion obtained according to the above production method.

BRIEF DESCRIPTION OF THE DRAWINGS

[Fig. 1] Fig. 1 is a microscopic image of the cellulose fiber composite film obtained in Example 2. The magnifying is 26.5.
[Fig. 2] Fig. 2 is a microscopic image of the cellulose fiber composite film obtained in Example 8. The magnifying is 26.5.

MODE FOR CARRYING OUT THE INVENTION

The microfibrillated cellulose fiber dispersion and its production method, as well as the cellulose fiber composite and its production method of the invention are described in detail hereinunder. In the invention, "% by weight" is the same as "% by mass".
The method for producing the microfibrillated cellulose fiber dispersion includes a fibrillation step of fibrillating cellulose fibers in a starting material dispersion containing cellulose fibers, at least one of a resin and a resin precursor, and an organic solvent, thereby giving microfibrillated cellulose fibers. Including the fibrillation step, the method solves the problems of aggregation and precipitation of microfibrillated cellulose fibers which, however, have been inevitable in conventional methods, and gives a dispersion where microfibrillated cellulose fibers are uniformly and stably dispersed.
In the invention, cellulose fibers are fibrillated in the presence of at least one of a resin and a resin precursor, and an organic solvent, and therefore the resulting microfibrillated cellulose fibers could be prevented from re-aggregating

and the stability of the dispersion could be thereby enhanced. In particular, in a case where an epoxy resin is used, the hydrogen bond acting between the hydroxyl group in the surfaces of the cellulose fibers and the epoxy group of the epoxy resin can enhance the compatibility between the cellulose fibers and the epoxy resin, and therefore, the effect of the invention is remarkable.

In a case where cellulose fibers are fibrillated in water and, after a resin is mixed in the aqueous dispersion, the dispersion is processed to produce a cellulose fiber composite, then water could hardly evaporate away and there would occur problems of poor film formability and poor mold formability; however, using the microfibrillated cellulose fiber dispersion obtained according to the production method of the invention solves the problems. In other words, the dispersion is excellent in film formability and mold formability.

First, the materials to be used in the invention (cellulose fibers, solvent, and at least one of resin and resin precursor) are described in detail.

<Cellulose Fibers>

The cellulose fibers for use in the invention are a starting material to give microfibrillated cellulose fibers (starting material for cellulose fibers), and may be any substance that contains cellulose (cellulose-containing substance) with no specific limitation on the type thereof.

Above all, preferred are those prepared by removing impurities through purification from the substances listed below, and more preferred is cellulose obtained from a vegetable-derived material. In the invention, cellulose may be used as the cellulose fibers, or cellulose partly containing impurities (cellulose material) may also be used.

Materials (substances) that contain cellulose fibers include, for example, woods such as softwood, hardwood, etc.; cotton such as cotton linter, cotton lint, etc.; strained lees such as bagasse, sugar beet trash, etc.; bast fibers such as flax, ramie, jute, kenaf, etc.; leaf fibers such as sisal, pineapple, etc.; petiolar fibers such as abaca, banana, etc.; fruit fibers such as coconut palm, etc.; base fibers such as bamboo, etc.; bacterial cellulose produced by bacteria; cysts of seaweeds and sea squirts such as valonia, green algae, etc. These natural celluloses have high crystallinity and are therefore favorable as capable of readily giving fibers having a low expansion coefficient and a high elastic modulus.

Bacterial cellulose is favorable as capable of readily giving fibers having a small fiber diameter. Cotton is also favorable as capable of readily giving fibers having a small fiber diameter, and another advantage thereof is that its crude material is readily available. Further, woods such as softwood, hardwood and the like are favorable as capable of giving fibers having a small fiber diameter, and other economic superiorities thereof are that woods are maximum biological resources on earth and are sustainable resources which are said to be produced in an amount of about 70,000,000,000
tons/year or more and that they greatly contribute toward reducing carbon dioxide which has negative influences on global warming.

If desired, the materials may be purified through the treatment mentioned below to remove impurities.

(Fiber Diameter)

From the viewpoint of the fibrillation efficiency in fibrillating the fibers and of the handleability thereof, the number average fiber diameter of the fibers is from 10 μm to 100 mm, preferably from 50 μm to 0.5 mm. Those purified in an ordinary manner could be a few hundred μm or so (preferably from 50 to 500 μm) in size, and those prepared by fibrillating cellulose in an ordinary method could be from a few nm to 1 μm.

For example, those prepared by purifying chips or the like having a size of a few cm are preferably mechanically processed with a defibrating machine such as a refiner, a beater or the like into fibers having a size of a few mm or so.

The method for determining the number average fiber diameter is not specifically defined. A picture of fibers are taken through SEM, TEM or the like, on which a diagonal line is drawn, and 12 fibers appearing around the line are extracted at random. The thickest fiber and the thinnest fiber are removed from these, and the diameter of each of the remaining 10 fibers is measured. The data are averaged to give the number average fiber diameter.

In case where the starting material is cut or ground and when the material is purified through the treatment to be mentioned below, then the material may be cut or ground in any stage before, during or after the treatment. For example, before purification treatment, the material may be ground with an impact grinder or a shearing grinder; but during or after purification treatment, the material may be processed with a refiner or the like.

(Purification Method)

In the invention, preferably, the cellulose fibers to be used are purified (purification step) to remove any other substance than cellulose from the starting material, for example, lignin, hemicellulose, resin (rosin), etc. In other words, it is desirable to use purified cellulose fibers.

The purification method is not specifically defined. For example, there is mentioned a method including degreasing the starting material with benzene-ethanol, then delignificating it according to a Wise process, processing it with alkali for hemicellulose removal. Also mentioned is an ordinary chemical pulp production method, for example, a production method for kraft pulp, sulfite pulp, alkali pulp. etc. Preferably, the starting material is heated in a digester for delignification or the like and is further processed for bleaching, etc.

As the dispersion medium for the purification treatment, water is generally used, but an aqueous solution of an acid or a base, or any other processing agent may also be used. In the latter case, the material may be finally washed with water.

The starting material may be ground into wood chips or wood powder, and the grinding may be carried out in any timing before the purification, or during or after the treatment, as mentioned above.

The acid or the base or the other processing agent to be used for the purification of cellulose fibers is not specifically defined. For example, there are mentioned sodium carbonate, sodium hydrogencarbonate, sodium hydroxide, potassium hydroxide, magnesium hydroxide, sodium sulfide, magnesium sulfide, sodium sulfite, calcium sulfite, magnesium sulfite, ammonium sulfite, sodium sulfate, sodium thiosulfate, sodium oxide, magnesium oxide, calcium oxide, acetic acid, oxalic acid, sodium hypochlorite, calcium hypochlorite, sodium chlorite, sodium chlorate, chlorine dioxide, chlorine, sodium perchlorate, sodium thiosulfate, hydrogen peroxide, ozone, hydrosulfite, anthraquinone, dihydroxydihydroxyanthracene, tetrahydroanthraquinone, anthrahydroquinone, as well as alcohols such as ethanol, methanol, 2-propanol, etc., and water-soluble organic solvents such as acetone, etc. One alone or two or more different types of these processing agents may be used here either singly or as combined.

If desired, the fibers may be bleached with chlorine, ozone, sodium hypochlorite, hydrogen peroxide, chlorine dioxide, etc.

Two or more different types of processing agents may be used to attain two or more different purification treatments. In such a case, the processed fibers are preferably washed with water between the purification treatments with different processing agents.

The temperature and the pressure for the purification treatment are not specifically defined. The temperature may be selected within a range of from 0°C to 100°C; and in treatment under a pressure of more than one atmospheric pressure, the temperature is preferably from 100°C to 200°C.

(Chemical Modification)

In the invention, the cellulose fibers to be used may be chemically modified into derivatives thereof (chemically modified cellulose fibers). Chemical modification means that the hydroxyl group in cellulose is chemically modified through reaction with a chemical modifier.

The chemical modification may be carried out before the above-mentioned purification treatment for removing lignin, hemicellulose and others, or may be carried out after the treatment. From the viewpoint of the efficient reaction with the chemical modifier, preferably, the purified cellulose is chemically modified. The chemical modification may also be carried out after cellulose has been fibrillated into cellulose fibers in the fibrillation step to be mentioned below.

The substituent to be introduced into the hydroxyl group in cellulose through the chemical modification (the substituent to be substituted for the hydrogen atom of the hydroxyl group and thereby introduced into the group) is not specifically defined. For example, there are mentioned acyl groups such as an acetyl group, an acryloyl group, a methacryloyl group, a propionyl group, a propioyl group, a butyryl group, a 2-butyryl group, a pentanoyl group, a hexanoyl group, a heptanoyl group, an octanoyl group, a nonanoyl group, a decanoyl group, an undecanoyl group, a dodecanoyl group, a myristoyl group, a palmitoyl group, a stearoyl group, a pivaloyl group, a benzoyl group, a naphthoyl group, a nicotinoyl group, an isonicotinoyl group, a furoyl group, a cinnamoyl group, etc.; isocyanate groups such as a 2-methacyloyloxyethylisocyanoyl group, etc.; alkyl groups such as a methyl group, an ethyl group, a propyl group, a 2-propyl group, a butyl group, a 2-butyl group, a tert-butyl group, a pentyl group, a hexyl group, a heptyl group, an octyl group, a nonyl group, a decyl group, an undecyl group, a dodecyl group, a myristyl group, a palmityl group, a stearyl group, etc.; as well as an oxirane group, an oxetane group, a thiirane group, a thietane group, etc. Of those, preferred are acyl group having from 2 to 12 carbon atoms such as an acetyl group, an acryloyl group, a methacryloyl group, a benzoyl group, a naphthoyl group, etc.

More concretely, $X_1$, $X_2$ or $X_3$ in the following formula (1) is preferred as the substituent mentioned above.

[Chemical Formula 1]

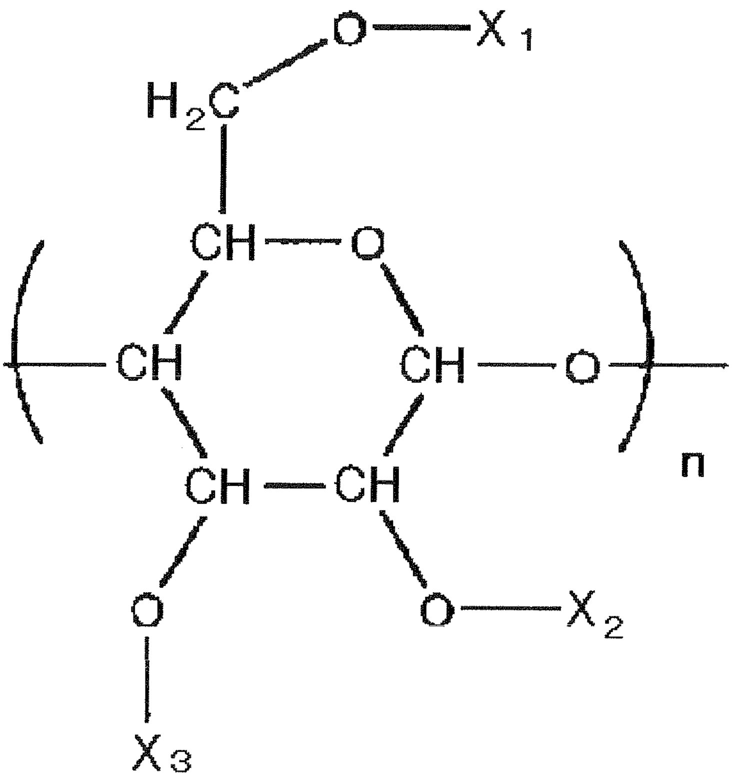

Embodiments of the above $X_1$, $X_2$ or $X_3$ in include aromatic ring-containing substituents. The aromatic ring-containing substituents are substituents derived from hydrocarbon aromatic compounds, heterocyclic aromatic compounds or non-benzenoid aromatic compounds.

The hydrocarbon aromatic compounds are monocyclic compounds of benzene ring, such as benzene, naphthalene, anthracene, etc.; or compounds formed by condensing from 2 to 12 such compounds. The upper limit of the condensation number is preferably at most 6.

The heterocyclic aromatic compounds are monocyclic compounds of 5 to 10-membered hetero ring, such as furan, thiophene, pyrrole, imidazole, etc.; or compounds formed by condensing from 2 to 12 such compounds. The upper limit of the condensation number is preferably at most 6.

The non-benzenoid aromatic compounds include, for example, annulene, etc., cyclopentadienyl anion, etc., cycloheptatrienyl cation, etc., tropone, etc., metallocene, etc., and acepleiadylene, etc. Of those, preferred are hydrocarbon aromatic compounds or heterocyclic aromatic compounds-derived substituents, and more preferred are hydrocarbon aromatic compounds-derived substituents. Even more preferred are naphthalene- or anthracene-derived substituents from the viewpoint of the availability of the starting materials for them.

In the aromatic ring-containing substituent, the hydrogen atom may be substituted with an alkyl group having from 1 to 12 carbon atoms. At least two aromatic ring-containing substituents selected from a group including the above-mentioned hydrocarbon aromatic compounds, heterocyclic aromatic compounds and non-benzenoid aromatic compounds may be linked to each other via a single bond or an alkylene group with from 1 to 3 carbon atoms therebetween.

In the aromatic ring-containing substituent, the linking group to bond the aromatic ring and cellulose is not specifically defined so far as the group is one resulting from reaction with the hydroxyl group in cellulose. For example, in the above-mentioned formula, O (oxygen atom) and the aromatic ring may directly bond to each other, or the aromatic ring may bond to O (oxygen atom) in cellulose via a linking group, -CO- or -CONH-. Above all, -CO- is especially preferred.

As the aromatic ring-containing substituent of the modifying substituent to be introduced into cellulose of cellulose fibers, preferred are a benzoyl group, a naphthoyl group and an anthroyl group, and more preferred is a benzoyl group.

(Chemical Modifier)

The modification method is not specifically defined. There is mentioned a method of reacting cellulose with a chemical modifier of those mentioned below.

Different types of chemical modifiers are described. For forming an ester group, for example, usable are acids, acid anhydrides, halogenation reagents, etc. For forming an ether group, for example, usable are alcohols, phenolic compounds, alkoxysilanes, phenoxysilanes, cyclic ether compounds such as oxirane (epoxy), etc. For forming a carbamate group, for example, usable are isocyanate compounds, etc. One or more different types of these chemical modifiers may be used here.

Acids of chemical modifiers to form an ester group include, for examples, acetic acid, acrylic acid, methacrylic acid, propanoic acid, butanoic acid, 2-butanoic acid, pentanoic acid, benzoic acid, naphthalenecarboxylic acid, etc. Acid anhydrides include, for example, acetic anhydride, acrylic anhydride, methacrylic anhydride, propanoic anhydride, butanoic anhydride, 2-butanoic anhydride, pentanoic anhydride, benzoic anhydride, phthalic anhydride, etc.

Halogenation reagents include, for example, acetyl halides, acryloyl halides, methacryloyl halides, propanoyl halides, butanoyl halides, 2-butanoyl halides, pentanoyl halides, benzoyl halides, naphthoyl halides, etc.

Alcohols of chemical modifiers to form an ether group include, for example, methanol, ethanol, propanol, 2-propanol, etc. Phenolic compounds include, for example, phenol, naphthol, etc. Alkoxysilanes include, for example, methoxysilane, ethoxysilane, phenoxysilane, etc.

Cyclic ether compounds include, for example, ethyloxirane, ethyloxetane, oxirane (epoxy), phenyloxirane (epoxy), etc.

Isocyanate compounds of chemical modifiers to form a carbamate group include, for example, methyl isocyanate, ethyl isocyanate, propyl isocyanate, phenyl isocyanate, etc.

Of those, especially preferred are acetic anhydride, acrylic anhydride, methacrylic anhydride, benzoyl halide and naphthoyl halide.

One alone or two or more different types of these chemical modifiers may be used here either singly or as combined.

(Chemical Modification Method)

Cellulose fibers may be chemically modified according to any known method. Specifically, according to an ordinary method, cellulose may be reacted with a chemical modifier for chemical modification thereof. In this case, if desired, a solvent or a catalyst may be used, and the system may be heated or the pressure thereof may be reduced.

In case where purified cellulose fibers are used here, the starting material is in the form of a hydrated one, and therefore, preferably, water therein is substituted with a reaction solvent so as to retard as much as possible the reaction of the chemical modifier with water. However, if the starting material is dried for removing water, then the material could be hardly fibrillated in the fibrillation step to be described below; and therefore, the drying step is undesirable here.

The amount of the chemical modifier is not specifically defined. Varying depending on the type of the chemical modifier, the amount is preferably at least 0.01 times the molar number of the hydroxyl group of cellulose, more preferably at least 0.05 times, but is preferably at most 100 times, more preferably at most 50 times.

As the solvent, preferred is use of a water-soluble organic solvent not interfering with esterification. The water-soluble organic solvent includes, for example, organic solvents such as acetone, pyridine, etc.; organic acids such as formic acid, acetic acid, oxalic acid, etc. Especially preferred are organic acids such as acetic acid, etc. Using an organic acid such as acetic acid or the like enables uniform chemical modification of cellulose, therefore facilitating fibrillation to follow, and it is considered that the composite to be obtained could have advantages of high heat resistance and high productivity. Any other solvent than the above may also be used here.

Not specifically defined, the amount of the solvent to be used may be generally at least 0.5 times the weight of cellulose, more preferably at least 1 time, but is preferably at most 200 times, more preferably at most 100 times.

As the catalyst, preferred is use of a basic catalyst such as pyridine, triethylamine, sodium hydroxide, sodium acetate, etc., or an acid catalyst such as acetic acid, sulfuric acid, perchloric acid, etc. The amount of the catalyst is not specifically defined. Varying depending on the type thereof, the amount of the solvent may be generally at least 0.01 times the molar number of the hydroxyl group in cellulose, more preferably at least 0.05 times, but is preferably at most 100 times, more preferably at most 50 times.

The temperature condition is not specifically defined. However, if the temperature is too high, then cellulose may be yellow or the degree of polymerization may lower; but if too low, then the reaction speed may lower. Therefore, the temperature is preferably from 10 to 130°C. The reaction time is not also specifically defined. Depending on the chemical modifier or the chemical modification rate, the time is preferably from a few minutes to dozens of hours.

After chemical modification of cellulose fibers in the manner as above, preferably, the fibers are fully washed with an organic solvent or water for terminating the reaction. If some unreacted chemical modifier remains in the fibers, it may cause discoloration later on, or may cause some problem in reaction with resin to form composite, and is therefore unfavorable.

(Chemical Modification Rate)

The chemical modification rate means the ratio of chemically modified groups to all the hydroxyl groups in cellulose, and the chemical modification rate may be determined according to the following titration method.

Titration Method:

0.05 g of a dried modified cellulose is accurately weighed, and 6 ml of methanol and 2 ml of distilled water are added thereto. This is stirred at 60 to 70°C for 30 minutes, and then 10 ml of an aqueous 0.05 N sodium hydroxide solution is added thereto. This is stirred at 60 to 70°C for 15 minutes, and further stirred at room temperature for one day. Using phenolphthalein, this is titrated with an aqueous 0.02 hydrochloric acid solution.

From the amount Z (ml) of the aqueous 0.02 N hydrochloric acid solution needed for titration, the molar number Q of the substituent introduced through the chemical modification can be calculated according to the following formula:

$$Q\ (\text{mol}) = \{0.05\ (\text{N}) \times 10\ (\text{ml})/1000\} - \{0.02\ (\text{N}) \times Z\ (\text{ml})/1000]$$

The relationship between the molar number Q of the substituent and the chemical modification rate X (mol%) is calculated according to the following formula [cellulose = $(C_6O_5H_{10})_n$ = $(162.14)_n$, number of hydroxyl groups/recurring unit = 3, molecular weight of OH = 17):

In the following, T is a value calculated by adding the atomic weight of oxygen (16) to the molecular weight of the substituent.

[Numerical Formula 1]

$$(\text{Amount of Sample})/[162.14 + (T - 17) \times 3X/100] = Q/[3X/100]$$

The above is solved, as follows:

[Numerical Formula 2]

$$X = 100/3 \times [162.14 \times Q]/[\text{amount of sample} - Q \times (T - 17)]$$

In the invention, the above-mentioned chemical modification rate is not specifically defined, but is preferably at least 1 mol% relative to all the hydroxyl groups in cellulose, more preferably at least 5 mol%, even more preferably at least 10 mol%, and is preferably at most 65 mol%, more preferably at most 50 mol%, even more preferably at most 40 mol%. Within the range, the dispersion stability of microfibrillated cellulose fibers in the dispersion thereof could be more enhanced, and when composite with resin is formed, the composite can have a low coefficient of linear thermal expansion.

<Solvent>

Not specifically defined, the solvent for use in the invention may be any one in which the resin or the resin precursor to be used can dissolve or disperse therein. The solvent may be an aqueous solvent such as water or the like or may also be an organic solvent, but preferred is an organic solvent.

The organic solvent includes, for example, aromatic hydrocarbons, aprotic polar solvents, alcoholic solvents, ketone-type solvents, glycol ether-type solvents, halogen solvents, etc. Of those, preferred are aprotic polar solvents (especially amide solvent), alcoholic solvents, ketone-type solvents and halogen solvents. One alone or two or more different types of solvents may be used here either singly or as combined.

The solvent used in the invention is removed in the subsequent step, and therefore preferably, its boiling point is not so high. Preferably, the boiling point of the organic solvent is not higher than 300°C, more preferably not higher than 200°C, even more preferably not higher than 180°C. From the viewpoint of the handleability, the solvent is preferably not lower than 0°C.

The aromatic hydrocarbon is preferably an aromatic hydrocarbon having from 6 to 12 carbon atoms. Concretely, for example, there are mentioned benzene, toluene, xylene, etc.

The aprotic polar solvent includes, for example, sulfoxide solvents such as dimethyl sulfoxide (DMSO), etc.; amide solvents such as formamide, N-methylformamide, N,N-dimethylformamide, acetamide, N-methylacetamide, N,N-dimethylacetamide, 2-pyrrolidone, N-methylpyrrolidone, etc.

The alcoholic solvent is preferably an alcoholic solvent having from 1 to 7 carbon atoms, concretely including, for example, methanol, ethanol, propanol, butanol, etc.

The ketone-type solvent (indicating a liquid that has a ketone group) is preferably a ketone solvent having from 3 to 9 carbon atoms, concretely including, for example, acetone, methyl ethyl ketone (MEK), methyl isobutyl ketone (MIBK), diisopropyl ketone, di-tert-butyl ketone, 2-heptanone, 4-heptanone, 2-octanone, cyclopentanone, cyclohexanone, cyclohexyl methyl ketone, acetophenone, acetylacetone, dioxane, etc. Of those, preferred are methyl ethyl ketone (MEK), methyl isobutyl ketone (MIBK), cyclopentanone and cyclohexanone, and more preferred are methyl ethyl ketone (MEK) and cyclohexanone.

The glycol ether-type solvent is preferably a glycol ether solvent having from 3 to 9 carbon atoms, concretely including, for example, ethylene glycol monomethyl ether, ethylene glycol monoethyl ether, ethylene glycol mono-n-butyl ether, ethylene glycol dimethyl ether, ethylene glycol monoethyl ether acetate, diethylene glycol monomethyl ether, diethylene glycol monoethyl ether, diethylene glycol mono-n-butyl ether, diethylene glycol dimethyl ether, diethylene glycol monoethyl ether acetate, propylene glycol monomethyl ether, propylene glycol mono-n-butyl ether, propylene glycol monomethyl ether acetate, etc.

The halogen solvent includes, for example, chloroform, methyl chloride, dichloromethane, carbon tetrachloride, trichloroacetic acid, methyl bromide, methyl iodide, tri(tetra)chloroethylene, chlorobenzene, benzyl chloride, etc.

<Resin, Resin Precursor>

Not specifically defined, resin or the resin precursor for use in the invention may be any resin or resin precursor capable of forming a composite with microfibrillated cellulose fibers to be mentioned below. The resin or the resin precursor includes, for example, thermoplastic resin, thermosetting resin, photo (active energy)-curable resin, and their precursors. The resin or the resin precursor also includes, for example, alcoholic resins, amide resins, ether resins, amine resins, aromatic resins, and their precursors. In addition, the resin or the resin precursor includes, for example, cellulose derivatives.

Of the above, preferred are thermoplastic resin, thermosetting resin, photocurable resin and their precursors, from the viewpoint of various properties and the productivity of the composites to be obtained.

One type alone or two or more different types of these resins or resin precursors may be used here either singly or as combined.

(Thermoplastic Resin and Precursor Thereof)

The thermoplastic resin includes, for example, styrenic resins, acrylic resins, aromatic polycarbonate resins, aliphatic polycarbonate resins, aromatic polyester resins, aliphatic polyester resins, aliphatic polyolefin resins, cyclic olefinic resins, polyamide resins, polyphenylene ether resins, thermoplastic polyimide resins, polyacetal resins, polysulfone resins, amorphous fluororesins, etc. One alone or two or more different types of these thermoplastic resins may be used here either singly or as combined.

The thermoplastic resin precursor means a precursor for producing the above-mentioned resin.

(Curable Resin and Precursor Thereof)

The thermosetting resin and a photo (active energy ray)-curable resin means a resin capable of curing under heat or light. The thermosetting resin precursor means a substance generally liquid, semisolid or solid at room temperature and exhibiting flowability at room temperature or under heat. This polymerizes or crosslinks, as assisted by a curing agent or a catalyst or by heat or light, to form a three-dimensional network structure while increasing the molecular weight thereof, and come to be an insoluble and infusible resin.

(Thermosetting Resin and Precursor Thereof)

In the invention, the thermosetting resin or its precursor is not specifically defined. For example, there are mentioned an epoxy resin, an acrylic resin, an oxetane resin, a phenolic resin, an urea resin, a melamine resin, an unsaturated polyester resin, a silicon resin, a polyurethane resin, a diallyl phthalate resin, a thermosetting polyimide resin, etc., and their precursors.

(Photocurable Resin and Precursor Thereof)

In the invention, the photocurable resin or its precursor is not specifically defined. For example, there are mentioned epoxy resin, acrylic resin, oxetane resin and the like, and their precursors of the resins described in the section of the thermosetting resin as above.

Of the above-mentioned resins and resin precursors, preferred are epoxy resin and its precursor and acrylic resin and its precursor from the viewpoint that they are liquid at around room temperature or are soluble in organic solvent. More preferred are epoxy resin and its precursor.

The epoxy resin includes various epoxy resins, for example, bisphenol-type epoxy resins such as bisphenol A-type epoxy resin, bisphenol F-type epoxy resin, bisphenol S-type epoxy resin, biphenyl-type epoxy resin, bisphenol AD-type epoxy resin, bisphenol acetophenone-type epoxy resin, bisphenol fluorenone-type epoxy resin, etc.; glycidyl ether-type epoxy resins with monocyclic biphenols such as catechol, resorcinol, hydroquinone, etc.; glycidyl ether-type epoxy resins such as dihydroxynaphthalene-type epoxy resin, dihydroxydihydroxyanthracene-type epoxy resin, phenol-novolak-type epoxy resin, cresol-novolak-type epoxy resin, bisphenol A-novolak-type epoxy resin, etc.; other various types of epoxy resins such as glycidyl ester-type epoxy resins, glycidylamine-type epoxy resins, linear aliphatic epoxy resins, alicyclic epoxy resins, heterocyclic epoxy resins, etc.

These epoxy resins may be substituted with a substituent not having any negative influence on the resins, such as an alkyl group, an aryl group, an ether group, an ester group, etc.

Of those epoxy resins, especially preferred here are bisphenol A-type epoxy resins and bisphenol F-type epoxy resins that are easily handleable; 4,4'-bisphenol-type epoxy resins and 3,3'-5,5'-tetramethyl-4,4'-biphenol-type epoxy resins that are crystalline resins and could have a low viscosity at a temperature not lower than the melting point thereof; phenol-novolak-type epoxy resins, cresol-novolak-type epoxy resins and bisphenol A-novolak-type epoxy resins that are polyfunctional and, when cured, can have a high crosslinking density to give cured products having high heat resistance.

The epoxy resin usable herein includes from monomer types ones having a low weight average molecular weight (for example, Mw = 200) to polymer typeshaving a high molecular weight (for example, Mw = 90,000). Epoxy resins having a weight-average molecular weight of 100,000 or more are unfavorable as difficult to handle. From the viewpoint of the handleability thereof, epoxy resins having a weight average molecular weight of from 200 to 80,000 are preferred, more preferably from 300 to 60,000.

The epoxy resin precursor includes, for example, diphenols, and may be any one in which the hydroxyl group bonds to the aromatic ring. For example, there are mentioned bisphenols such as bisphenol A, bisphenol F, bisphenol B, bisphenol AD, 4,4'-biphenyl, 3,3',5,5'-tetramethyl-4,4'-biphenyl, etc.; and biphenol, catechol, resorcinol, hydroquinone, dihydroxylnaphthalene, etc.

The epoxy resin precursor further includes those diphenols substituted with a non-obstructive group such as an alkyl group, an aryl group, an ether group, an ester group, etc. Of those diphenols, preferred are bisphenol A, bisphenol F, 4,4'-biphenol and 3,3',5,5'-tetramethyl-4,4'-biphenol. Different types of these diphenols may be used here as combined.

As others than diphenols, there are mentioned polyfunctional phenolic resins. Polyfunctional phenolic resins include, for example, phenol-novolak-type resins, bisphenol-type novolak resins, dicyclopentadiene-type phenolic resins, Xylok-type phenolic resins, terpene-modified phenolic resins, melamine-modified phenol-novolak resins, triazine structure-containing novolak resins, etc.

The acrylic resin includes, for example, polymers and copolymers of (meth)acrylic acid, (meth)acrylonitrile, (meth)acrylate, (meth)acrylamide, etc. Above all, preferred are polymers and copolymers of (meth)acrylic acid and (meth)acrylate.

The acrylic resin precursor includes, for example, (meth)acrylic acid, (meth)acrylonitrile, (meth)acrylate, (meth)acrylamide, etc. Above all, preferred are (meth)acrylic acid and (meth)acrylate.

Not specifically defined, the weight-average molecular weight of the acrylic resin is preferably from 300 to 3,000,000 from the viewpoint of the handleability thereof, more preferably from 400 to 2,500,000.

(Alcoholic Resin)

The alcoholic resin includes, for example, polyethylene glycol, polyether polythiol, polyester polyol, polyvinyl alcohol, amylose, amylopectine, sorbitol, polycaprolactone, polyvalerolactone, polybutyrolactone, polyglycol, polylactic acid, etc.

(Amide Resin)

The amid resin includes, for example, polyacrylamide, chitin, chitosan, polyvinyl pyrrolidone, polycaprolactam, etc.

(Ether Resin)

The ether resin includes, for example, crown ether, polyethylene glycol, polypropylene glycol, etc.

(Amine Resin)

The amine resin includes, for example, polyallylamines, polylysine, various amine-modified acrylic copolymers, etc.

(Aromatic Resin)

The aromatic resin includes, for example, polyphenylene oxide, catechin, tannin, terpene, etc. Of those, preferred are alcoholic resins and amide resins; and more preferred are polyvinyl alcohol and polyvinyl pyrrolidone.

(Cellulose Derivative)

The cellulose derivative includes, for example, cellulose organic acid esters, cellulose ethers, alkyl celluloses, hydroxyalkyl celluloses, ionic substituent-having cellulose esters, etc.
The cellulose organic ester includes, for example, cellulose diacetate, cellulose triacetate, etc. Other cellulose organic esters are, for example, acetyl cellulose of which the degree of acetylation is suitably controlled, cellulose acetate propionate, cellulose acetate butyrate, etc.
The cellulose ether includes, for example, alkyl cellulose hydroxyalkyl cellulose, ionic substituent-having cellulose ether, etc.
The alkyl cellulose includes, for example, methyl cellulose, ethyl cellulose, etc.
The hydroxyalkyl cellulose includes, for example, hydroxyethyl cellulose, hydroxypropyl cellulose, hydroxypropylmethyl cellulose, hydroxyethylmethyl cellulose, etc.
The ionic substituent-having cellulose ether includes, for example, carboxymethyl cellulose, etc.

<Other Additive>

In the invention, in addition to the above-mentioned compounds, if desired, various compounds may be used, such as chain transfer agent, UV absorbent, filler, silane coupling agent, photo/thermal polymerization initiator, curing agent, curing promoter, etc. The compound may be made to exist in the fibrillation step, or may be added to the dispersion after the fibrillation step.
In case where an epoxy resin or its precursor is used as the resin or its precursor, an epoxy resin curing agent may be used. In general, the curing agent is added to the dispersion after the fibrillation step to be mentioned below.
The epoxy resin curing agent for use herein is not specifically defined. For example, herein usable are polyphenol compounds, amine compounds, acid anhydrides and those mentioned below.
For example, there are mentioned various types of polyphenols such as bisphenol A, bisphenol F, bisphenol AD, hydroquinone, resorcinol, methylresorcinol, biphenol, tetramethylbiphenol, dihydroxynaphthalane, dihydroxydiphenyl ether, thiodiphenols, phenol-novolak resin, cresol-novolak resin, phenol-aralkyl resin, terpene-phenol resin, dicyclopendadiene-phenol resin, bisphenol A-type novolak resin, naphthol-novolak resin, biphenylphenol resin, bromobisphenol A, bromophenol-novolak resin, etc.; polyphenol resins to be obtained through condensation of various types of phenols with various types of aldehydes such as benzaldehyde, hydroxybenzaldehyde, crotonaldehyde, glyoxal, etc.; various types of phenolic resins such as co-condensation resins of heavy oil or pitch, phenol and formaldehyde, etc.; active ester compounds to be obtained by wholly or partly esterifying, for example, benzoylating or acetylating the phenolic hydroxyl groups of those various types of phenols (phenolic resins); acid anhydrides such as methyltetrahydrophthalic anhydride, hexahydrophthalic anhydride, pyromellitic anhydride, methylnadic anhydride, etc.; amines such as diethylenetriamine, isophoronediamine, diaminodiphenyl methane, diaminodiphenyl sulfone, dicyandiamide, aliphatic polyamine, polyamide, etc.
A cationic polymerization initiator may also act as the curing agent for epoxy resin or its precursor. The cationic polymerization initiator usable here includes, for example, an active energy ray cationic polymerization initiator capable of generating a cation species or a Lewis acid by the action of an active energy ray applied thereto, and a thermal cationic polymerization initiator capable of generating a cation species or a Lewis acid by heating.
For example, there are mentioned phosphine compounds such as triphenyl phosphine etc.; phosphonium salts such as tetraphenylphosphonium tetraphenylborate, etc.; imdiazoles such as 2-methylimidazole, 2-phenylimidazole, 2-ethyl-4-methylimidazole, 2-undecylimidazole, 1-cyanoethyl-2-methylimidazole, 2,4-dicyano-6-[2-methylimidazolyl-(1)]-ethyl-S-triazine, etc.; imidazolium salts such as 1-cyanoethyl-2-undecylimidazolium trimellitate, 2-methylimidazolium

isocyanurate, 2-ethyl-4-methylimidazolium tetraphenylborate, 2-ethyl-1,4-dimethylimidazolium tetraphenylborate, etc.; amines such as 2,4,6-tris(dimethylaminomethyl)phenol, benzyldimethylamine, etc.; ammonium salts such as triethylammonium tetraphenylborate, etc.; diazabicyclo compounds 1,5-diazabicyclo(5.4.0)-7-undecene, 1,5-diazabicyclo(4.3.0)-5-none, etc.

Further mentioned are, for example, tetraphenylborate, phenol salts, phenol-novolak salts and 2-ethylhexanoate salts of these diazabicyclo compounds; as well as triflate (Triflic acid) salts, boron trifluoride ether complex compounds, metal fluoroboron complex salts, bis(perfluoroalkylsulfonyl)methane metal salts, aryldiazonium compounds, aromatic onium salts, dicarbonyl chelates with Group IIIa to Va element of the Periodic Table, thiopyrylium salts, Group VIb element of the Periodic Table in the form of $MF_6^-$ anion (where M is selected from phosphorus, antimony and arsenic), arylsulfonium complex salts, aromatic iodonium complex salts, aromatic sulfonium complex salts, bis[4-(diphenylsulfonio)phenyl]sulfide bishexafluorometal salts (for example, phosphates, arsenates, antimonates, etc.), arylsulfonyl complex salts, halogen-containing complex ion aromatic sulfoniums or iodonium salts, etc.

In addition, also usable here are mixed ligand metal salts of iron compounds and silanol-aluminium complexes. Some of those salts are available as commercial products, such as FX-512 (3M), UVR-6990 and UVR-6974 (Union Carbide), UVE-1014 and UV-1016 (General Electric), KI-85 (Degussa), SP-150 and SP-170 (Asahi Denka), and Sunaid SI-60L, SI-80L and SI-100L (Sanshin Chemical Industry).

Preferred thermal cationic polymerization initiators are triflate salts, and their examples include diethylammonium triflate, triethylammonium triflate, diisopropylammonium triflate and ethyldiisopropylammonium triflate available as FC-520 from 3M (many of these are described in Modern Coatings published by R. R. Alm in October 1980).

On the other hand, some aromatic onium salts that are used as an active energy ray cationic polymerization initiator could generate a cationic species by heating, and these may also be used as a thermal cationic polymerization initiator.

One type alone or two or more different types of these may be used here either singly or as combined.

The curing promoter includes, for example, amines such as benzyldimethylamine, various types of imidazole compounds; phosphines such as triphenyl phosphine, etc.

<Production Process for Microfibrillated cellulose Fiber Dispersion>

The fibrillation step in the production method of the invention is a step of fibrillating cellulose fibers in a starting material dispersion containing cellulose fibers, at least one of a resin and a resin precursor, and a solvent to give microfibrillated cellulose fibers.

The method for producing the starting material dispersion is not specifically defined, and the dispersion can be prepared by mixing the components to be used. The cellulose fibers to be used may be chemically modified cellulose fibers.

Preferably, the starting material dispersion is prepared via the following two steps (solvent substitution step and mixing step). Specifically, prior to the fibrillation step, a step mentioned below is preferably carried out. In general, cellulose fibers are purified and are fibrillated in the state of an aqueous dispersion thereof or in a state thereof containing water. Accordingly, by preparing the starting material dispersion via the following two steps, water can be removed from cellulose and therefore the stability of the microfibrillated cellulose fiber dispersion to be finally obtained can be thereby enhanced more. In case where water is used as a solvent, the following solvent substitution step is generally unnecessary.

(Solvent Substitution Step) A step of substituting water in the aqueous dispersion containing cellulose fibers is substituted with an organic solvent.

(Mixing Step) A step of mixing the dispersion obtained in the solvent substitution step with at least one of a resin and a resin precursor.

The method of substituting water with a solvent in the solvent substitution step is not specifically defined. There is mentioned a method including removing water from the aqueous dispersion containing cellulose fibers (preferably purified or chemically modified cellulose fibers) through filtration or the like, then adding thereto an organic solvent to be used in fibrillation, stirring and mixing them, and again filtrating it to remove the organic solvent. Addition of organic solvent and filtration are repeated to thereby substitute the medium, water in the dispersion with the organic solvent.

In case where the organic solvent to be used in the fibrillation step to be mentioned below is a water-insoluble one, the medium may be once substituted with a water-soluble organic solvent, and then this may be again substituted with a water-insoluble organic solvent.

The main medium of the aqueous dispersion to be used here is generally water, but may partly contain any other solvent.

Not specifically defined, the content of the cellulose fibers in the aqueous dispersion is preferably from 0.1 to

60% by weight of the total amount of the aqueous dispersion.

Similarly, the content of the cellulose fibers in the dispersion after solvent substitution is preferably from 0.1 to 60% by weight of the total amount of the dispersion.

The mixing step is a step of mixing the dispersion that contains cellulose fibers and an organic solvent, as obtained in the above-mentioned solvent substitution step, with at least one of a resin and a resin precursor.

In mixing them, at least one of a resin and a resin precursor may be directly added to the dispersion, or at least one of a resin and a resin precursor may be first dissolved in an organic solvent to prepare a solution and then the solution may be added thereto and mixed.

In case where the solution is prepared, the solvent to be used may be the same as the organic solvent used in the solvent substitution step, or may differ so far as the two are miscible with each other.

In case where an organic solvent containing at least one of a resin and a resin precursor is used in the solvent substitution step, the mixing step may be omitted.

The content of the cellulose fibers in the starting material dispersion is not specifically defined. From the viewpoint of the handleability that the viscosity or the liquid stability of the microfibrillated cellulose fiber dispersion to be obtained could be on a favorable level, the content is preferably at least 0.5% by weight of the total amount of the starting material dispersion, more preferably at least 1 % by weight, but is preferably at most 50% by weight, more preferably at most 40% by weight.

The content of at least one of the resin and the resin precursor in the starting material dispersion is not also specifically defined. From the viewpoint of the handleability that the viscosity or the liquid stability of the microfibrillated cellulose fiber dispersion to be obtained could be on a favorable level, the content is preferably at least 2% by weight of the total amount of the starting material dispersion, more preferably at least 2.5% by weight, but is preferably at most 95% by weight, more preferably at most 80% by weight.

The content of the organic solvent in the starting material dispersion is not also specifically defined. From the viewpoint of the handleability that the viscosity or the liquid stability of the microfibrillated cellulose fiber dispersion to be obtained could be on a favorable level, the content is preferably at least 1% by weight of the total amount of the starting material dispersion, more preferably at least 5% by weight, but is preferably at most 97.5% by weight, more preferably at most 95% by weight.

In the starting material dispersion, the ratio by weight of at least one of the resin and the resin precursor to the organic solvent is not specifically defined. From the viewpoint of the handleability that the viscosity or the liquid stability of the microfibrillated cellulose fiber dispersion to be obtained could be on a favorable level, the content of the organic solvent is preferably from 5 to 2000 parts by weight relative to 100 parts by weight of the content of at least one of the resin and the resin precursor, more preferably from 25 to 1000 parts by weight.

In the starting material dispersion, the ratio by weight of the cellulose fibers to at least one of the resin and the resin precursor is not specifically defined. From the viewpoint of the handleability that the viscosity or the liquid stability of the microfibrillated cellulose fiber dispersion to be obtained could be on a favorable level, the content of the cellulose fibers is preferably at least 2.5% by weight of the total amount (100% by weight) of the cellulose fibers and at least one of the resin and the resin precursor, more preferably at least 3% by weight, even more preferably at least 5% by weight, but is preferably at most 97.5% by weight, more preferably at most 97% by weight, even more preferably at most 95% by weight.

(Fibrillation Method)

In the fibrillation step, the method of fibrillating cellulose fibers is not specifically defined. Concretely, for example, there is mentioned a method of putting ceramic beads having a diameter of 1 mm or so into the starting material dispersion having a cellulose fiber concentration of from 0.5 to 50% by weight, for example, 1% by weight or so, and shaking it by the use of a paint shaker, or a media mill such as a bead mill or the like to thereby fibrillate the cellulose fibers.

As a type of media mill, for example, there is mentioned a case that includes a rotating main shaft, a side shaft to rotate as coordinating with the rotation of the main shaft, and a ring, and this acts for fibrillation of fibers.

The method for fibrillating cellulose fibers incudes, for example, a method of introducing the starting material dispersion into a blender-type disperser or through a high-speed rotating slit to thereby impart a shear force thereto for fibrillation (high-speed rotation homogenizer), a method of rapidly reducing the pressure from high pressure to low pressure to thereby generate a shear force between cellulose fibers for fibrillation (high-pressure homogenizer method), a method of using a counter-collision disperser such as MasscoMizer X (by Masuko Sangyo), etc.

As described above, the method of fibrillating cellulose fibers includes fibrillation treatment with a media mill such as a bead mill or the like, fibrillation (microrefining) treatment through jetting, fibrillation treatment according to a rotary fibrillation method, fibrillation treatment through ultrasonic treatment, etc.

In particular, treatment with beadsmill is preferred, as the fibrillation efficiency is high and the dispersibility of the resulting microfibrillated cellulose fibers is enhanced more.

In case where cellulose fibers are fibrillated according to the above treatment, the solid concentration in the starting material dispersion (total amount of cellulose fibers and resin or its precursor) is not specifically defined but is preferably at least 2.5% by weight, more preferably at least 3% by weight and is preferably at most 99% by weight, more preferably at most 50% by weight. When the solid concentration in the starting material dispersion to be processed in the fibrillation step is too low, then the liquid amount is too much relative to the amount of cellulose to be processed and therefore the efficiency is poor; but when the solid concentration is too high, then the flowability of the dispersion would be poor.

As the apparatus for bead milling, usable is any known apparatus, for example, including UltraApex Mill UAM, DualApex Mill DAM (both by Kotobuki Industries), Star Mill (by Ashizawa Finetech), OB Mill (by Turbo Kogyo), etc.

The material of the beads to be used is not specifically defined, including, for example, glass, zirconia, etc. The size of the beads is not also specifically defined. In general, the diameter may be from 0.01 to 5 mm or so.

Regarding the condition for bead milling, the most suitable condition may be suitably selected depending on the materials to be used, such as the type of the solvent, the fiber diameter of the cellulose fibers, etc. In general, the bead milling is preferably attained at a peripheral speed of from 4 to 16 m/sec for from 1 to 5 hours or so.

In case where cellulose fibers are fibrillated with a bead mill, the fibers may be processed multiple times under different conditions.

Regarding the high-speed rotary homogenizer, when the revolution thereof is higher, then shearing could be given thereto and the fibrillation efficiency with the homogenizer could be thereby increased. The revolution is, for example, preferably at least 10000 rpm, more preferably at least 15000 rpm, even more preferably at least 20000 rpm. The upper limit of the revolution is not specifically defined, but is preferably at most 30000 rpm from the viewpoint of the apparatus performance.

The processing time is preferably at least 1 minute, more preferably at least 5 minutes, even more preferably at least 10 minutes. From the viewpoint of the productivity, the processing time is preferably at most 6 hours. In case where heat is generated by shearing, preferably, the system is cooled in such a manner that the liquid temperature could not be over 50°C.

Preferably, the system is stirred or circulated in order that uniform shearing could be given to the starting material dispersion.

In case where a high-pressure homogenizer is used, the starting material is pressurized with a pressurizer preferably up to at least 30 MPa, more preferably at least 100 MPa, even more preferably at least 150 MPa, still more preferably at least 220 MPa, and the thus pressurized dispersion is jetted out through a nozzle having an orifice diameter of at least 50 $\mu$m, and is thereby so depressurized that the pressure difference could be preferably at least 30 MPa, more preferably at least 80 MPa, even more preferably at least 90 MPa.

Owing to the cleavage phenomenon to occur owing to the pressure difference, the cellulose fibers can be fibrillated. When the pressure in the high-pressure condition is low, or when the pressure difference from the high pressure to the low pressure condition is small, then it is unfavorable since the fibrillation efficiency may be low and the recurring jetting frequency for attaining the desired fiber diameter may increase.

When the orifice diameter of the nozzle through which the starting material dispersion is jetted out is too large, then a sufficient fibrillation effect could not be obtained, and in such a case, even when the jetting treatment is repeated, cellulose fibers having a desired fiber diameter could not be obtained.

If desired, the starting material dispersion may be jetted out repeatedly to increase the degree of fibrillation, thereby giving microfibrillated cellulose fibers having a desired fiber diameter. In general, the recurring frequency (number of passes) is preferably at least once, more preferably at least 3 times, and is, in general, preferably at most 20 times, more preferably at most 15 times. When the number of passes is larger, then the degree of fibrillation could increase; however, when the number of passes is too large, it is unfavorable as the cost increases.

The high-pressure homogenizer apparatus is not specifically defined. For example, herein usable is "Starburst System" by Gaulin or by Sugino Machine.

When the pressure in the high-pressure condition in jetting is higher, the fibers may be more finely fibrillated according to the more efficient cleavage phenomenon by the larger pressure difference; however, as the upper limit of the apparatus specification, in general, the pressure is preferably at most 245 MPa.

Similarly, the pressure difference from the high pressure condition to the low pressure is also preferably larger. In general, the high-pressure condition made by a pressurizer may be released by jetting out into air, and therefore, the upper limit of the pressure difference in the case is, in general, preferably at most 245 MPa.

When the orifice diameter of the nozzle through which the starting material dispersion is jetted out is smaller, a high-pressure condition can be created with ease; however, if the diameter is too small, then the jetting efficiency may be poor. The orifice diameter is preferably at least 50 $\mu$m, more preferably at least 100 $\mu$m, even more preferably at least 150 $\mu$m, but is preferably at most 800 $\mu$m, more preferably at most 500 $\mu$m, even more preferably at most 350 $\mu$m.

The jetting temperature (dispersion temperature in jetting) is not specifically defined, but is, in general, preferably from 5°C to 100°C. The temperature is preferably not higher than 100°C, since the apparatus, concretely the feed pump

and the high-pressure sealant part can be prevented from being deteriorated.

One or two jetting nozzles may be used here. The jetted starting material dispersion may be made to collide against the wall, ball or ring arranged ahead the site toward which the dispersion is jetted. In case where the dispersion is jetted out through two nozzles, the jetted streams of the starting material dispersion may be made to collide with each other at the site toward which the dispersion is jetted.

Only by the treatment with such a high-pressure homogenizer, the microfibrillated cellulose fiber dispersion can be obtained. In such a case, the recurring frequency may increase to attain the desired sufficient degree of fibrillation, and the treatment efficiency is poor. Therefore, it is desirable that, after high-pressure homogenizer treatment is attained once to five times, the processed fibers are fibrillated through subsequent ultrasonic treatment to be mentioned below.

In the invention, the cellulose concentration in the starting material dispersion that has been processed by fibrillation treatment and is then processed by ultrasonic treatment (hereinafter this may be referred to as starting material dispersion for ultrasonic treatment) is preferably at least 0.5% by weight of the total amount of the dispersion, more preferably at least 1% by weight, but is preferably at most 50% by weight, more preferably at most 40% by weight.

When the cellulose concentration in the starting material dispersion for ultrasonic treatment, which is to be processed through irradiation with ultrasonic waves, is at least 0.5% by weight, then the treatment can be attained efficiently; and when the concentration is at most 50% by weight, then the viscosity can be prevented from increasing and the fibrillation can be attained uniformly.

<Microfibrillated cellulose Fiber Dispersion>

In the microfibrillated cellulose fiber dispersion obtained through the fibrillation step, microfibrillated cellulose fibers are uniformly dispersed, and the microfibrillated cellulose fibers are prevented from aggregating and precipitating therein, and therefore the dispersion has excellent liquid stability. Concretely, it is generally desirable that, even when the dispersion is statically left at room temperature for 10 days, no precipitation is visually detected therein.

In the composite including microfibrillated cellulose fibers and a resin (matrix material) to be obtained by the use of the dispersion as described below, in general, the microfibrillated cellulose fibers are uniformly dispersed in the resin, and the composite therefore exhibits an excellent low linear expansivity.

(Number average Fiber Diameter of Microfibrillated cellulose Fibers)

The number average fiber diameter of the microfibrillated cellulose fibers in the microfibrillated cellulose fiber dispersion obtained according to the above-mentioned method can be determined by drying the dispersion to remove the dispersion medium followed by analyzing it through SEM, TEM, etc.

The number average fiber diameter of the microfibrillated cellulose fibers fibrillated in the invention is preferably at most 100 nm, from the viewpoint that the composite to be obtained here can exhibit a more excellent low linear expansivity, more preferably at most 80 nm. In general, the lower limit of the number average fiber diameter is preferably at least 4 nm.

The number average fiber diameter is determined as follows: A picture of the fibers are taken through SEM, TEM or the like, on which a diagonal line is drawn, and 12 fibers appearing around the line are extracted at random. The thickest fiber and the thinnest fiber are removed from these, and the diameter of each of the remaining 10 fibers is measured. The data are averaged to give the number average fiber diameter.

The content of the microfibrillated cellulose fibers in the microfibrillated cellulose fiber dispersion may be suitably controlled depending on the amount of the cellulose fibers of the starting material used; however, from viewpoint of the stability of the dispersion, the content is preferably at least 0.5% by weight of the total amount of the dispersion, more preferably at least 1% by weight, and is preferably at most 50% by weight, more preferably at most 40% by weight, even more preferably at most 30% by weight.

The content of the organic solvent, and at least one of the resin and the resin precursor in the microfibrillated cellulose fiber dispersion is the same as the content of each constituent component in the starting material dispersion mentioned above, and the preferred range thereof is also the same.

The ratio by weight of the microfibrillated cellulose fibers to at least one of the resin and the resin precursor is the same as the ratio by weight of the cellulose fibers to at least one of the resin and the resin precursor mentioned above. Further, the ratio by weight of at least one of the resin and the resin precursor to the organic solvent is also as described above.

(Cellulose I-type Crystal)

The microfibrillated cellulose fibers obtained in the above-mentioned fibrillation step preferably have a cellulose I-type crystal structure. The cellulose I-type crystal is preferred as having a higher degree of crystal elasticity than any

other crystal structure, and therefore the cellulose fibers of the type are preferred as having a high modulus of elasticity, a high strength and a low coefficient of linear thermal expansion.

The microfibrillated cellulose fibers can be identified as those having an I-type crystal structure in the diffraction profile in wide-angle X-ray diffractiometry thereof, in which the fibers have two typical peaks at 2θ of from 14 to 17° or so and at 2θ of from 22 to 23° or so.

<Method for Producing Cellulose Fiber Composite>

Using the microfibrillated cellulose fiber dispersion mentioned above, a cellulose fiber composite with microfibrillated cellulose fibers uniformly dispersed in a resin can be obtained.

The method for producing the cellulose fiber composite is not specifically defined. Preferably, the production method includes the following two steps (addition step and composite formation step).

(Addition Step) A step of adding at least one of a resin and a resin precursor to the microfibrillated cellulose fiber dispersion.

(Composite Formation Step) A step of processing the microfibrillated cellulose fiber dispersion obtained in the addition step, through at least one of heat treatment and photoexposure treatment to thereby remove the solvent to give a cellulose fiber composite containing microfibrillated cellulose fibers and a resin.

In case where the microfibrillated cellulose fiber dispersion to be used contains a desired amount of at least one of a resin and a resin precursor, the addition step may be omitted. In other words, the addition step is an optional step.

(Addition Step)

The addition step is a step of adding at least one of a resin and a resin precursor to the microfibrillated cellulose fiber dispersion. As described above, as a result of the step, there is obtained a microfibrillated cellulose fiber dispersion that satisfies the desired ratio by weight of the microfibrillated cellulose fibers to at least one of the resin and the resin precursor therein. The amount of at least one of the resin and the resin precursor to be added may be suitably controlled depending on the intended use.

In the addition step, other additives such as the above-mentioned curing agent and others may also be added to the dispersion. For example, in case where an epoxy resin is used as the resin, an epoxy resin curing agent may also be added to the dispersion in the step.

In the addition step, a solvent may be added in place of at least one of the resin and the resin precursor. Further, at least one of a resin and a resin precursor may be added to the dispersion along with a solvent thereto.

Specific examples of at least one of the resin and the resin precursor, and the solvent to be added here are the same as at least one of the resin and the resin precursor, and the solvent contained in the above-mentioned microfibrillated cellulose fiber dispersion obtained according to the production method of the invention.

(Composite Formation Step)

The composite formation step is a step of processing the microfibrillated cellulose fiber dispersion through at least one of heat treatment and photoexposure treatment to thereby remove the solvent to give a cellulose fiber composite containing microfibrillated cellulose fibers and a resin. As a result of the step, there is obtained a cellulose fiber composite having an excellent low linear expansivity. In case where a resin precursor is used, the precursor is cured in the step to be a resin.

In at least one treatment of heating and photoexposure, the microfibrillated cellulose fiber dispersion may be applied onto a substrate to form a coating film thereon, or may be cast into a mold. After applied onto a substrate or cast into a mold, if desired, the dispersion may be dried to remove the solvent.

The condition for the heat treatment is not specifically defined. In case where a resin precursor is used, the temperature may be one not lower than the temperature at which the precursor cures. In particular, from the viewpoint of removing the solvent through evaporation, the heating temperature is preferably not lower than 60°C, more preferably not lower than 100°C. From the viewpoint of preventing the microfibrillated cellulose fibers from being decomposed, the heating temperature is preferably not higher than 250°C, more preferably not higher than 200°C. The heating time is preferably from 60 to 180 minutes from the viewpoint of the productivity.

The heat treatment may be attained multiple times with varying the temperature and the heating time. Concretely, it is desirable that the heat treatment is three-stage treatment that includes primary heating at 60 to 100°C for 30 to 60 minutes, secondary heating at 130 to 160 for 30 to 60 minutes, and tertiary heating at a temperature higher than the secondary heating temperature by from 40 to 60°C, falling within a range of from 150 to 200°C, for 30 to 60 minutes, in

order that the solvent is completely removed and the surface profile failure of the composite is evaded and the composite can be completely cured. The heat treatment is preferably at least two-stage or more multi-stage treatment.

In photoexposure treatment, for example, used is light of IR ray, visible ray, UV ray or the like, as well as radiation such as electron beam, etc. Light is preferred and UV ray is more preferred. The wavelength of the light is preferably from 200 to 450 nm, more preferably from 300 to 400 nm.

Regarding the quantity of light for irradiation, the most suitable level can be selected depending on the resin precursor or the photopolymerization initiator to be used. Concretely, for example, in case where UV ray having a wavelength of from 300 to 450 nm is used for irradiation, the irradiation dose thereof is preferably within a range of from 0.1 $J/cm^2$ to 200 $J/cm^2$, more preferably within a range of from 1 $J/cm^2$ to 20 $J/cm^2$.

More preferably, photoirradiation is attained multiple times, as divided. Briefly, in one preferred embodiemnt, from 1/20 to 1/3 or so of the whole dose is applied in the first irradiation, and then the remaining necessary dose may be applied in the second and the subsequent irradiation. Specific examples of the lamp to be used include metal halide lamp, high-pressure mercury lamp, UV LED lamp, etc.

In case where at least one of an epoxy resin and its precursor is used as at least one of the above-mentioned resin and the resin precursor, preferably, at least one of an epoxy resin curing agent and a curing promoter is added to the dispersion and the dispersion is cured to give a composite.

In case where the weight-average molecular weight (Mw) of the epoxy resin component in the dispersion is from 200 to 6,000, preferably, the curing agent is incorporated in the dispersion in a ratio, epoxy resin (equivalent)/epoxy resin curing agent (equivalent) of from 1/0.8 to 1/1.2. In case where the weight-average molecular weight (Mw) of the epoxy resin component in the dispersion is from more than 6,000 to 90,000, the dispersion may be cured by adding an epoxy resin curing agent thereto, but preferably, a polyfunctional epoxy resin is added thereto in an amount of from 2 to 20% by weight of the epoxy resin component to cure the dispersion.

A high-molecular weight epoxy resin has a low epoxy group concentration, and therefore for curing the resin, it is desirable to add a polyfunctional epoxy resin thereto to increase the epoxy group concentration of the resin thereby increasing the crosslinking density thereof.

Preferably, the curing promoter is incorporated in an amount of from 0.1 to 5.0 parts by weight relative to 100 parts by weight of all the epoxy resins.

Regarding the curing condition, for example, the following curing methods I and II are preferred.

Curing Method I: In case where the weight-average molecular weight (Mw) of the epoxy resin component in the dispersion is from 200 to 6,000, an epoxy resin curing agent is added to the dispersion, then mixed with heating at a temperature of from 100 to 200°C for 5 minutes, and subsequently a curing promoter is rapidly mixed to prepare a resin composition. The solvent component is removed from the resin composition under low pressure, then the composition id defoamed, cast into a mold and heated at 120 to 200°C for 2 to 5 hours to give a composite.

Curing Method II: In case where the weight-average molecular weight (Mw) of the epoxy resin component in the dispersion is from more than 6,000 to 90,000, a polyfunctional epoxy resin and a curing promoter are added to the dispersion and mixed to prepare a varnish. Using an applicator having a slit width of 300 μm, the varnish is applied onto a PTFE tape (Chuko Chemical Industry's Chuko Flow Skived Tape MSF-100). Using a hot air drier, the coating film is kept at 60°C for 60 minutes, then at 160°C for 60 minutes, and further at 200°C for 60 minutes to give a composite.

<Cellulose Fiber Composite>

(Content of Microfibrillated cellulose Fibers)

The content of the microfibrillated cellulose fibers in the cellulose fiber composite to be obtained according to the production method of the invention is not specifically defined. In a preferred embodiment, the content of the microfibrillated cellulose fibers is preferably at least 2.5% by weight of the total amount of the cellulose fiber composite, more preferably at least 5% by weight, even more preferably at least 10% by weight, but is preferably at most 99% by weight, more preferably at most 80% by weight, even more preferably at most 70% by weight.

When the content of the microfibrillated cellulose fibers in the cellulose fiber composite is not smaller than the above-mentioned lower limit, then the effect of the microfibrillated cellulose fibers to reduce the linear thermal expansion coefficient of the cellulose fiber composite could be sufficient. When the content of the microfibrillated cellulose fibers in the cellulose fiber composite is not larger than the above-mentioned upper limit, then the resin could well adhere the fibers to each other and could well fill the space between the fibers, whereby the strength and the transparency of the cellulose fiber composite could be enhanced and the surface smoothness of the cured composite could be bettered.

(Resin Content)

The resin content in the cellulose fiber composite to be obtained according to the production method of the invention is not specifically defined. From the mold formability of the composite, the content is preferably at least 1% by weight, more preferably at least 20% by weight, even more preferably at least 30% by weight, but is preferably at most 97.5% by weight, more preferably at most 95% by weight, even more preferably at most 90% by weight.

Preferably, the cellulose fiber composite includes substantially cellulose fibers and a resin.

The content of the microfibrillated cellulose fibers and the resin in the cellulose fiber composite can be determined, for example, from the weight of cellulose before composite formation and the weight of cellulose after composite formation. In another method, the cellulose fiber composite may be immersed in a solvent capable of dissolving the resin therein to thereby remove the resin, and the content may also be determined from the weight of the remaining microfibrillated cellulose fibers. As still other methods, there may be mentioned a method of determining the content from the specific gravity of the resin in the composite, and a method of quantifying the functional groups in the resin or the microfibrillated cellulose fibers through NMR or IR to thereby determine the intended content.

(Shape, Thickness)

The shape of the cellulose fiber composite to be obtained according to the production method of the invention is not specifically defined. For example, the composite may be a plate-like one, or may also be a plate-like one having a curved face. Further, the composite may have a miscellaneous form. The composite is not always required to have a uniform thickness, but the thickness thereof may partly differ.

In case where the composite is a tabular (sheet-like or film-like) one, the thickness (mean thickness) thereof is preferably from 10 μm to 10 cm. Having a thickness falling within the range, the composite can secure the strength as a structural material. More preferably, the thickness is from 50 μm to 1 cm, even more preferably from 80 μm to 250 μm.

Of the above-mentioned tabular articles, the film means a tabular article having a thickness of around up to 200 μm, and the sheet means a tabular article having a larger thickness than the film.

(Coefficient of linear thermal expansion)

The cellulose fiber composite obtained according to the invention has a low coefficient of linear thermal expansion (elongation/K). The coefficient of linear thermal expansion of the cellulose fiber composite is preferably from 1 to 70 ppm/K, more preferably from 1 to 60 ppm/K, even more preferably from 1 to 50 ppm/K.

For example, in use for substrates, when the coefficient of linear thermal expansion of an inorganic thin film transistor is around 15 ppm/K and the coefficient of linear thermal expansion of the cellulose fiber composite could be at most 50 ppm/K, then the coefficient of linear thermal expansion difference between the two layers in lamination of the composite and the inorganic film could be prevented from increasing and therefore the resulting laminate structure could be prevented from cracking. Accordingly, the coefficient of linear thermal expansion of the cellulose fiber composite is especially preferably from 1 to 50 ppm/K.

The coefficient of linear thermal expansion can be determined according to the method described in the section of Examples to follow hereinunder.

(Glass Transition Temperature)

In the cellulose fiber composite obtained in the invention, cellulose fibers are uniformly dispersed in resin therefore exhibiting the effect of increasing Tg (glass transition temperature) of the resin. Owing to the effect, the composite can be a material having a high Tg suitable for use to be mentioned below. In particular, in case where an epoxy resin is used in the composite, the effect is remarkable. In use for electric materials, the increase in Tg of the composite by from 3 to 4°C brings about great advantages.

<Use>

The cellulose fiber composite to be obtained according to the production method of the invention can be used as laminates along with a substrate of resin or the like. The microfibrillated cellulose fiber dispersion may be applied onto a substrate, and, as mentioned above, this may be processed through heat treatment, photoexposure treatment or the like, thereby producing a laminate. The laminate may have a protective film.

The cellulose fiber composite to be obtained according to the production method of the invention or the laminate mentioned above may be used in various applications. For example, there are mentioned adhesives, coating materials, structural materials for civil engineering, as well as insulating materials for electric or electronic parts, etc.

In particular, owing to the excellent heat resistance and the low thermal expansivity, as well as the excellent molding workability thereof, the composite and the laminate are favorably used for multilayer electric laminate boards, for wiring boards such as new-system print wiring boards according to a build-up method or the like, and for sealants. In addition, the composite and the laminate are usable for flexible laminate boards, resist materials and seal materials.

EXAMPLES

The invention is described more concretely in the following Production Examples, Examples and Comparative Examples. Not overstepping the scope and the spirit thereof, the invention is not limited by the following Examples.

Methods for determining various physical properties of the microfibrillated cellulose fiber dispersion and the cellulose fiber composite are described below.

[Dispersion Stability Test for Microfibrillated cellulose Fiber Dispersion]

A microfibrillated cellulose fiber dispersion was prepared, and immediately after its preparation, the dispersion was statically left at room temperature for 10 days and visually checked for the presence or absence of precipitation therein according to the following criteria: AA: No precipitation was seen at all. A: Little precipitation was seen. B: Some precipitation was seen orsome aggregation was seen in a liquid.. C: Extremely much precipitation was seen or aggregation was seen in most in a liquid.. AA and A are good.

[Number average Fiber Diameter of Microfibrillated cellulose Fibers in Microfibrillated cellulose Fiber Dispersion]

The number average fiber diameter of microfibrillated cellulose fibers was determined by analyzing the fibers through optical microscopy, SEM, TEM or the like. Concretely, the dispersion was dried to remove the organic solvent, and a 30,000-power picture of the fibers therein was taken through SEM, on which a diagonal line was drawn, and 12 fibers appearing around the line were extracted at random. The thickest fiber and the thinnest fiber were removed from these, and the diameter of each of the remaining 10 fibers was measured. The data were averaged to give the number average fiber diameter of the fibers in the dispersion.

[Film Formability of Microfibrillated cellulose Fiber Dispersion]

The film formability of the microfibrillated cellulose fiber dispersion into a cellulose fiber composite was evaluated according to the following criteria: AA: The dispersion was formed into a uniform film. A: The dispersion was formed into a nearly uniform film. B: The film formed of the dispersion was somewhat uneven and had some pinholes. C: The film formed of the dispersion had many pinholes; or the dispersion could not be formed into a film. AA and A are good.

In Example 4, the evaluation of "film formability" was intended to evaluate the moldability of the dispersion in a predetermined mold. AA indicates that the moldability of the dispersion was excellent; and C indicates that the surface smoothness of the molded sample was not good and there occurred some molding failure.

[Dispersibility of Microfibrillated cellulose Fibers in Cellulose Fiber Composite 1 (visual inspection)]

The dispersibility of the microfibrillated cellulose fibers in the cellulose fiber composite was visually evaluated according to the following criteria: AAA: The microfibrillated cellulose fibers "transmitted light and the fibers could not be confirmed in visual inspection". AA: The microfibrillated cellulose fibers "dispersed uniformly". A: The fibers "dispersed nearly uniformly". B: The fibers "somewhat aggregated". C: The fibers "were nonuniform". AAA, AA and A are good.

[Dispersibility of Microfibrillated cellulose Fibers in Cellulose Fiber Composite 2 (image analysis)]

An image of the cellulose fiber composite was taken through a microscope, and the image was binarized, and the areal percentage (%) of the part with no cellulose existing therein in one visual field was calculated.

[Dispersibility of Microfibrillated cellulose Fibers in Cellulose Fiber Composite 3 (microscopy)]

The dispersed condition of the microfibrillated cellulose fibers in the cellulose fiber composite was inspected through 3000-power SEM in the surface direction and the cross-sectional direction of the composite, thereby evaluating the dispersibility of the fibers in the composite. AA: The microfibrillated cellulose fibers "dispersed uniformly". A: The fibers "dispersed nearly uniformly". B: "Some aggregates having a size of at least 50 μm were seen." C: "Many aggregates having a size of at least 50 μm were seen." AA and A are good.

[Coefficient of linear thermal expansion and Tg of Cellulose Fiber Composite]

The cellulose fiber composite was cut into a size of 2.5 mm width x 20 mm length. Using SII's TMA "EXSTAR 6000" in a tension mode with a chuck-to-chuck distance of 10 mm, under a load of 30 mN and in a nitrogen atmosphere, this was heated from room temperature up to 150°C at 10°C/min, then cooled from 150°C to 20°C at 10°C/min, and further heated from 20°C to 200°C at 5°C/min. The coefficient of linear thermal expansion of the composite was calculated from the data found from 40°C to 110°C in the second heating.
In addition, Tg of the composite was calculated from the data from found 40°C to 200°C in the second heating.

<Production Example 1>

Wood powder (by Miyashita Wood, Beimatsu 100 (Douglas fir, red fir) having a particle size of from 50 to 250 μm and a mean particle size of 138 μm) was degreased in an aqueous 2 wt.% sodium carbonate solution at 80°C for 6 hours. This was washed with desalted water, and then delignінated with sodium hypochlorite under an acid condition with acetic acid at 80°C for 5.5 hours. This was washed with desalted water, and then immersed in an aqueous 5 wt.% potassium hydroxide solution for 16 hours for hemicellulose removal treatment. This was washed with desalted water to give cellulose fibers (number average fiber diameter 60 μm).

<Production Example 2>

The cellulose fibers that had been treated for hemicellulose removal and washed with desalted water in Production Example 1 were filtered to remove water. These were dispersed in acetic acid and filtered, and the process was repeated three times to thereby substitute water with acetic acid. 25 ml of toluene, 20 ml of acetic acid and 0.1 ml of aqueous 60% perchloric acid were mixed, and 1 g of the acetic acid-substituted cellulose fibers were added thereto, and 1.3 ml of acetic anhydride was added thereto. With stirring, this was reacted for 1 hour. After the reaction, the reaction liquid was filtered, and then washed with methanol and desalted water in that order.
The chemical modification rate of the thus-obtained, acetylated cellulose fibers was determined according to the above-mentioned method for measurement of chemical modification rate, and was 16 mol%.

<Production Example 3>

The cellulose fibers that had been treated for hemicellulose removal and washed with desalted water in Production Example 1 were filtered to remove water. These were dispersed in acetic acid and filtered, and the process was repeated three times to thereby substitute water with acetic acid. One g of sodium acetate was dissolved in 30 g of acetic acid, and 1 g of the obtained cellulose fibers were dispersed therein. The dispersion was heated at 80°C, and 2.1 g of benzoyl chloride was added thereto. With stirring, this was reacted for 5 hours. After the reaction, the reaction liquid was filtered, and then washed with methanol and desalted water in that order.
The chemical modification rate of the benzoylated cellulose fibers was determined according to the above, and was 37 mol%.

<Production Example 4>

Purified cotton linter was dispersed in water to be 0.5% by weight, and this was led to pass through an ultra-high-pressure homogenizer (Sugino Machine's Ultimizer) under 245 MPa for a total of 10 times. The aqueous dispersion of microfibrillated cellulose fibers was diluted to be 0.2% by weight, and put into a PTFE filter having a diameter of 90 mm and having a pore size of 1 μm to become 11 g/m$^2$ of basis weightfor low pressure filtration. After water was thus removed through filtration, 30 ml of iso-butanol was gently put into it to thereby substitute water in the cellulose nonwoven fabric on PTFE with iso-butanol. Subsequently, this was press-dried at 120°C under 0.14 MPa for 5 minutes to give a white cellulose nonwoven fabric. (Fabric thickness: 20 μm, Porosity: 61 %, Number average fiber diameter of the cellulose fibers: 100 nm.)

<Production Example 5>

Needle bleached kraft pulp (NBKP) was dispersed in water to be 0.5% by weight, and this was led to pass through an ultra-high-pressure homogenizer (Sugino Machine's Ultimizer) under 245 MPa for a total of 10 times, thereby giving an aqueous dispersion of cellulose (number average fiber diameter of cellulose: 80 nm).

<Example 1>

The hydrous acetylated cellulose fibers obtained in Production Example 2 (fiber content, 7% by weight - the balance was mainly water) was filtered for water removal. These were dispersed in methyl ethyl ketone and filtered, and the process was repeated three times to thereby substitute water with methyl ethyl ketone.
On the other hand, methyl ethyl ketone and cyclohexanone were added to a composition containing 30% by weight of modified biphenol-type epoxy resin, 35% by weight of methyl ethyl ketone and 35% by weight of cyclohexanone (JER's YX6954BH30) to prepare an epoxy resin composition having a controlled resin content of 20% by weight (modified biphenol-type epoxy resin 20% by weight, methyl ethyl ketone 40% by weight, cyclohexanone 40% by weight).
The methyl ethyl ketone-substituted, acetylated cellulose fibers and the epoxy resin solution were mixed in such a manner that the content of the acetylated cellulose fibers therein could be 25% by weight relative to the epoxy resin solid content therein, thereby preparing a cellulose fiber dispersion (starting material dispersion).
The obtained starting material dispersion was processed with a rotary high-speed homogenizer (M Technic's Clearmix 2.2S) at 20000 rpm for 30 minutes to fibrillate the cellulose fibers, thereby giving a microfibrillated cellulose fiber dispersion in which microfibrillated cellulose fibers were dispersed. The number average fiber diameter of the obtained microfibrillated cellulose fibers was 80 nm. Various measurement results are shown in Table 1.

<Example 2>

To the microfibrillated cellulose fiber dispersion obtained in Example 1, added were a special novolak-type epoxy resin (corresponding to epoxy resin curing agent, JER's 157S65) in an amount of 5% by weight relative to the epoxy resin solid content in the microfibrillated cellulose fiber dispersion, and 2-ethyl-4(5)-methylimidazole (curing promoter, JER's EMI-24) in an amount of 0.05% by weight relative to the total amount of the epoxy resin solid content and the special novolak-type epoxy resin. This was mixed uniformly, and then a part of the solvent was evaporated away. Using an applicator, this was formed into a coating film (thickness: 200 μm).
The coating film was heated at 60°C for 1 hour, then heated at 160°C for 1 hour, and further heated at 200°C for 1 hour to cure it, thereby giving a cellulose fiber composite. The number average fiber diameter of the microfibrillated cellulose fibers in the composite was 80 nm, like the above. Various measurement results are shown in Table 1.

<Example 3>

The hydrous benzoylated cellulose fibers obtained in Production Example 3 (fiber content, 7% by weight - the balance was mainly water) was filtered for water removal. These were dispersed in methyl ethyl ketone and filtered, and the process was repeated three times to thereby substitute water with methyl ethyl ketone.
On the other hand, methyl ethyl ketone was added to bisphenol A-type epoxy resin (JER's 828EL) to prepare an epoxy resin composition having a controlled resin content of 50% by weight (bisphenol A-type epoxy resin 50% by weight, methyl ethyl ketone 50% by weight).
The methyl ethyl ketone-substituted, benzoylated cellulose fibers and the epoxy resin solution were mixed in such a manner that the content of the benzoylated cellulose therein could be 25% by weight relative to the epoxy resin solid content therein, thereby preparing a cellulose fiber dispersion.
The obtained starting material dispersion was processed with a rotary high-speed homogenizer (M Technic's Clearmix 2.2S) at 20000 rpm for 30 minutes to fibrillate the cellulose fibers, thereby giving a microfibrillated cellulose fiber dispersion in which microfibrillated cellulose fibers were dispersed. The number average fiber diameter of the obtained microfibrillated cellulose fibers was 75 nm. Various measurement results are shown in Table 1.

<Example 4>

A bisphenol A-type novolak resin (corresponding to epoxy resin curing agent, JER's YLH129) was added to the microfibrillated cellulose fiber dispersion obtained in Example 3, in an amount of 63 parts relative to 100 parts of the epoxy resin in the dispersion. Using an evaporator (BUCHI's Rota Vapor: R-124), methyl ethyl ketone in the mixture was evaporated away at 90°C and under a low pressure of 0.15 KPa for 15 minutes. Subsequently, 2-ethyl-4(5)-methylimidazole (curing promoter, JER's EMI-24) was added thereto in an amount of 1% by weight relative to the total amount of the epoxy resin solid content and the bisphenol A-type novolak resin, and uniformly mixed to prepare a resin mixture liquid.
The resin mixture liquid was cast into a casting frame having a depth of 2 mm thickness × 100 mm length × 30 mm width, heated at 160°C for 1 hour, and then at 200°C for 1 hour to cure it, thereby giving a cellulose fiber composite. The number average fiber diameter of the microfibrillated cellulose fibers in the composite was 75 nm, like the above. Various measurement results are shown in Table 1.

<Example 5>

A microfibrillated cellulose fiber dispersion was prepared in the same manner as in Example 1 except that the cellulose fibers obtained in Production Example 1 were used. The number average fiber diameter of the obtained microfibrillated cellulose fibers was 95 nm. Various measurement results are shown in Table 1.

<Example 6>

To the microfibrillated cellulose fiber dispersion obtained in Example 5, added were a special novolak-type epoxy resin (corresponding to epoxy resin curing agent, JER's 157S65) in an amount of 5% by weight relative to the epoxy resin solid content in the microfibrillated cellulose fiber dispersion, and 2-ethyl-4(5)-methylimidazole (curing promoter, JER's EMI-24) in an amount of 0.05% by weight relative to the total amount of the epoxy resin solid content and the special novolak-type epoxy resin. This was mixed uniformly, and then a part of the solvent was evaporated away. Using an applicator, this was formed into a coating film (thickness: 200 μm).

The coating film was heated at 60°C for 1 hour, then heated at 160°C for 1 hour, and further heated at 200°C for 1 hour to cure it, thereby giving a cellulose fiber composite. The number average fiber diameter of the microfibrillated cellulose fibers in the composite was 95 nm, like the above. Various measurement results are shown in Table 1.

<Example 7>

In the same manner as in Example 1, the hydrous acetylated cellulose fibers obtained in Production Example 2 (fiber content 7% by weight - the balance was mainly water) was mixed with an epoxy resin so that the content of the acetylated cellulose fibers in the resulting mixture could be 25% by weight relative to the epoxy resin content therein, thereby preparing a cellulose fiber dispersion.

The obtained starting material dispersion was processed in beadsmill (Kotobuki Industries' UltraApex Mill UAM-015) in which the bead diameter was 0.3 mm, at a peripheral speed of 11.4 m/sec for 4 hours, and then further processed therein in which the bead diameter was 0.05 mm, at a peripheral speed of 11.4 m/sec for 4 hours, to fibrillate the cellulose fibers therein, thereby preparing a microfibrillated cellulose fiber dispersion in which microfibrillated cellulose fibers were dispersed. The number average fiber diameter of the obtained microfibrillated cellulose fibers was 50 nm. Various measurement results are shown in Table 1.

<Example 8>

In the same manner as in Example 2, the curing agent and the curing promoter were added to the microfibrillated cellulose fiber dispersion obtained in Example 7 to cure the dispersion, thereby giving a cellulose fiber composite. The number average fiber diameter of the microfibrillated cellulose fibers in the composite was 50 nm like the above. Various measurement results are shown in Table 1.

<Example 9>

In the same manner as in Example 1, the hydrous acetylated cellulose fibers obtained in Production Example 2 (fiber content 7% by weight - the balance was mainly water) was mixed with an epoxy resin so that the content of the acetylated cellulose fibers in the resulting mixture could be 30% by weight relative to the epoxy resin content therein, thereby preparing a cellulose fiber dispersion.

The obtained starting material dispersion was processed in a multi-ring media mill (Nara Machinery MIC-O Model) at 1000 rpm for 40 minutes to fibrillate the cellulose fibers, thereby producing a microfibrillated cellulose fiber dispersion in which microfibrillated cellulose fibers were dispersed. Various measurement results are shown in Table 1.

<Example 10>

In the same manner as in Example 2, the microfibrillated cellulose fiber dispersion obtained in Example 9 was cured to give a cellulose fiber composite. Various measurement results are shown in Table 1.

<Example 11>

In the same manner as in Example 9 except that the rotation number was 2000 rpm and the processing time was 20 minutes, a microfibrillated cellulose fiber dispersion was obtained in which microfibrillated cellulose fibers were dispersed. The number average fiber diameter of the obtained microfibrillated cellulose fibers was 70 nm. Various

measurement results are shown in Table 1.

<Example 12>

The microfibrillated cellulose fiber dispersion obtained in Example 11 was cured in the same manner as in Example 2 to give a cellulose fiber composite. The number average fiber diameter of the microfibrillated cellulose fibers in the composite was 70 nm like the above. Various measurement results are shown in Table 1.

<Example 13>

The hydrous acetylated cellulose fibers obtained in Production Example 2 (fiber content, 7% by weight - the balance was mainly water) was filtered for water removal. These were dispersed in methylene chloride and filtered, and the process was repeated three times to thereby substitute water with methylene chloride. On the other hand, cellulose acetate (by Daicel Chemical Industry) was dissolved in methylene chloride to be 10% by weight.

The methylene chloride-substituted, acetylated cellulose fibers and the cellulose acetate solution were mixed in such a manner that the content of the acetylated cellulose fibers therein could be 25% by weight relative to the cellulose acetate solid content therein, thereby preparing a cellulose fiber dispersion.

The obtained starting material dispersion was processed in beadsmill (Kotobuki Industries' UltraApex Mill UAM-015) in which the bead diameter was 0.3 mm, at a peripheral speed of 11.4 m/sec for 4 hours to fibrillate the cellulose fibers therein, thereby preparing a microfibrillated cellulose fiber dispersion in which microfibrillated cellulose fibers were dispersed.

The number average fiber diameter of the obtained microfibrillated cellulose fibers was 50 nm. Various measurement results are shown in Table 1.

<Example 14>

Using an applicator, the microfibrillated cellulose fiber dispersion obtained in Example 13 was formed into a coating film (thickness: 200 μm). The coating film was heated at 60°C for 1 hour to give a cellulose fiber composite. The number average fiber diameter of the microfibrillated cellulose fibers in the composite was 50 nm, like the above. Various measurement results are shown in Table 1.

<Example 15>

The cellulose fibers obtained in Production Example 1 were processed with water so that the cellulose fiber content could be 0.5% by weight and the content of polyvinyl alcohol (Nippon Gohsei's AH-17, having a degree of saponification of from 97 to 98.5% and a mean degree of polymerization of 1700) could be 1% by weight, thereby preparing a cellulose fiber dispersion.

The obtained starting material dispersion was processed with a rotary high-speed homogenizer (M Technic's Clearmix 2.2S) at 20000 rpm for 60 minutes to fibrillate the cellulose fibers, thereby giving a microfibrillated cellulose fiber dispersion in which microfibrillated cellulose fibers were dispersed. Various measurement results are shown in Table 2.

<Example 16>

The microfibrillated cellulose fiber dispersion obtained in Example 15 was cast on an Optool-treated glass dish, defoamed in vacuum, and put in an oven at 105°C for 2 hours or more to evaporate water. A composite in which cellulose was uniformly dispersed in polyvinyl alcohol was peeled.

<Example 17>

In the same manner as in Example 15 except that the cellulose fiber content was 0.5% by weight and the polyvinyl alcohol content was 0.5% by weight, a microfibrillated cellulose fiber dispersion was produced in which microfibrillated cellulose fibers were dispersed. The number average fiber diameter of the obtained microfibrillated cellulose fibers was 30 nm. Various measurement results are shown in Table 2.

<Example 18>

In the same manner as in Example 16, a cellulose fiber composite was produced from the microfibrillated

cellulose dispersion obtained in Example 17. Various measurement results are shown in Table 2.

<Example 19>

In the same manner as in Example 15 except that the cellulose fiber content was 0.5% by weight and the polyvinyl alcohol content was 0.1% by weight, a microfibrillated cellulose fiber dispersion was produced in which microfibrillated cellulose fibers were dispersed. Various measurement results are shown in Table 2.

<Example 20>

In the same manner as in Example 16, a cellulose fiber composite was produced from the microfibrillated cellulose dispersion obtained in Example 19. Various measurement results are shown in Table 2.

<Example 21>

In the same manner as in Example 15 except that the cellulose fiber content was 0.5% by weight and the polyvinyl alcohol content was 0.05% by weight, a microfibrillated cellulose fiber dispersion was produced in which microfibrillated cellulose fibers were dispersed. Various measurement results are shown in Table 2.

<Example 22>

In the same manner as in Example 16, a cellulose fiber composite was produced from the microfibrillated cellulose dispersion obtained in Example 21. Various measurement results are shown in Table 2.

<Comparative Example 1>

100 parts by weight of a thermosetting resin precursor epoxy compound, bisphenol A-type epoxy resin (JER's jER827) was melted at 120°C, and mixed with 18 parts by weight of a curing agent (m-xylylenediamine) to prepare a mixture liquid.

Next, the mixture liquid was immersed in the cellulose nonwoven fabric obtained in Production Example 4 (immersion time: within 5 minutes), and thermally cured in a pressing machine at a temperature of 100°C and under a pressure of 9.8 MPa (curing time: 1 hour) to give a cellulose fiber composite. Its thickness was about 30 $\mu$m. From the weight thereof, the content of the cellulose fibers in the composite was 29% by weight.

The cross section of the cellulose fiber composite was inspected. In this, a part of epoxy resin alone was detected in the epoxy resin-containing cellulose nonwoven fabric and around it, and it could not be said that the cellulose fibers were uniformly dispersed in the composite. Various measurement results are shown in Table 2.

This embodiment corresponds to the embodiment described in JP-A 2006-316253.

<Comparative Example 2>

The dispersion obtained in Production Example 5 and a bisphenol A-type epoxy resin (JER's Epikote YL6810) were mixed. With stirring with a three-one motor, the chamber was depressurized to thereby substitute water with the epoxy resin in the dispersion.

An amine-type curing agent JEFFAMINE D-400 (by HUNTSMAN) was added thereto in an amount of 64 parts by weight relative to 100 parts by weight of the epoxy resin, and mixed to prepare a composition. The composition was viscous, for which an applicator was useless.

Therefore, this was applied onto a substrate by hand, heated at 60°C for 3 hours and further heated at 120°C for 3 hours to cure it, thereby giving a cellulose fiber composite. From the amount of the starting material used, the content of the cellulose fibers in the composite was 45% by weight. Various measurement results are shown in Table 2.

This embodiment corresponds to the embodiment described in JP-A 2007-146143.

<Comparative Example 3>

Methyl ethyl ketone was added to the composition obtained in Comparative Example 2 in such a manner that the total solid concentration could be 10% by weight, and the composition was stirred for 30 minutes. However, when the stirring was stopped, the solid deposited, or that is, the liquid stability of the dispersion was poor.

The solid content is meant to include cellulose, epoxy resin, curing agent and others except the solvent.

<Comparative Example 4>

An example of fibrillation of cellulose fibers in the absence of a resin and a resin precursor is described in detail hereinunder.

The hydrous benzoylated cellulose fibers obtained in Production Example 3 (fiber content, 7% by weight - the balance was mainly water) was filtered for water removal. These were dispersed in methyl ethyl ketone and filtered. The process was repeated three times to thereby substitute water with methyl ethyl ketone. The fibers were dispersed in methyl ethyl ketone to give a dispersion having a cellulose fiber content of 1.4% by weight. The obtained starting material dispersion was processed with a rotary high-speed homogenizer (M Technic's Clearmix 2.2S) at 20000 rpm for 60 minutes to fibrillate the cellulose fibers.

A composition containing 30% by weight of a modified biphenol-type epoxy resin, 35% by weight of methyl ethyl ketone and 35% by weight of cyclohexanone (JER's YX6954BH30) was added to and mixed in the fibrillated dispersion in such a manner that the content of the benzoylated cellulose fibers therein could be 25% by weight relative to the epoxy resin solid content therein. The number average fiber diameter of the obtained cellulose fibers was 300 nm. Various measurement results are shown in Table 2.

Further, to the obtained dispersion, added were a special novolak-type epoxy resin (corresponding to epoxy resin curing agent, JER's 157S65) in an amount of 5% by weight relative to the epoxy resin content in the dispersion, and a curing promoter, JER's EMI-24 in an amount of 0.05% by weight relative to the total amount of the epoxy resin content and JER's 157S65, and these were uniformly mixed, and then a part of the solvent was evaporated away. Using an applicator, this was formed into a coating film.

The coating film was heated at 60°C for 1 hour, then at 160°C for 1 hour, and then at 200°C for 1 hour to cure it, thereby giving a cellulose fiber composite. The number average fiber diameter of the cellulose fibers in the composite was 300 nm, like the above. Various measurement results are shown in Table 2.

<Comparative Example 5>

The cellulose fibers obtained in Production Example 1 were processed with water so as to have a cellulose fiber content of 0.5% by weight, thereby giving a cellulose fiber dispersion. The obtained starting material dispersion was processed with a rotary high-speed homogenizer (M Technic's Clearmix 2.2S) at 20000 rpm for 60 minutes to fibrillate the cellulose fibers, thereby giving a microfibrillated cellulose fiber dispersion in which microfibrillated cellulose fibers were dispersed.

An aqueous solution of polyvinyl alcohol (Nippon Gohsei's AH-17, having a degree of saponification of from 86.5 to 89% and a mean degree of polymerization of 500) was added to the dispersion in such a manner that the weight of cellulose could be the same as the weight of polyvinyl alcohol. The number average fiber diameter of the obtained microfibrillated cellulose fibers was 40 nm. Various measurement results are shown in Table 2.

In the same manner as in Example 16, the mixed dispersion was cast into an Optool-treated glass dish, defoamed, and put in an oven at 105°C for 2 hours or more to evaporate water. The resulting cellulose fiber composite could not be peeled from the glass dish.

[Table 1]

| | Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Dispersiveness Stability of Microfibrillated cellulose Fiber Dispersion | AA | - | AA | - | AA | - | AA | - | -AA | - | AA | - | -AA | - |
| Number average Fiber Diameter of Microfibrillated cellulose Fibers (nm) | 80 | 80 | 75 | 75 | 95 | 95 | 50 | 50 | - | - | 70 | 70 | 50 | 50 |
| Film Formability | - | AA | - | AA | - | A | - | AA | - | AA | - | AA | - | AA |
| Dispersibility of Microfibrillated cellulose Fibers in Composite (visual inspection) | - | AA | - | AA | - | A | - | AAA | - | AAA | - | AAA | - | AAA |
| Dispersibility of Microfibrillated cellulose Fibers in Composite (image analysis) | - | 35.6% | - | - | - | - | - | 0.0% | - | - | - | - | - | - |
| Dispersibility of Microfibrillated cellulose Fibers in Composite (microscopy) | - | A | - | AA | - | A | - | AA | - | AA | - | AA | - | AA |
| Microfibrillated cellulose Fiber Content in Composite (% by weight) | - | 20 | - | 20 | - | 20 | - | 20 | - | 20 | - | 20 | - | 20 |
| Coefficient of linear thermal expansion (ppm/K) | - | 42 | - | 46 | - | 52 | - | 41 | - | - | - | - | - | 31 |
| Tg (°C) | - | 140 | - | - | - | 141 | - | 142 | - | - | - | - | - | - |

[Table 2]

| | Example | | | | | | | | Comparative Example | | | | |
|---|---|---|---|---|---|---|---|---|---|---|---|---|---|
| | 15 | 16 | 17 | 18 | 19 | 21 | 21 | 22 | 1 | 2 | 3 | 4 | 5 |
| Dispersiveness Stability of Microfibrillated cellulose Fiber Dispersion | AA | - | AA | - | AA | - | AA | - | - | C | C | B | A |
| Number average Fiber Diameter of Microfibrillated cellulose Fibers (nm) | - | - | 30 | 30 | - | - | - | - | 100 | >1000 | >1000 | 300 | 40 |
| Film Formability | - | A | - | A | - | A | - | A | C | C | - | B | C |
| Dispersibility of Microfibrillated cellulose Fibers in Composite (visual inspection) | - | AAA | - | AAA | - | AAA | - | AAA | - | C | - | B | AAA |
| Dispersibility of Microfibrillated cellulose Fibers in Composite (image analysis) | - | - | - | - | - | - | - | - | - | - | - | - | - |
| Dispersibility of Microfibrillated cellulose Fibers in Composite (microscopy) | - | AA | - | AA | - | AA | - | AA | C | C | - | B | AA |
| Microfibrillated cellulose Fiber Content in Composite (% by weight) | - | 33 | - | 50 | - | 83 | - | 91 | 29 | 45 | - | 20 | 50 |
| Coefficient of linear thermal expansion (ppm/K) | - | - | - | 18 | - | 12 | - | 10 | 11 | 25 | - | 39 | - |
| Tg (°C) | - | - | - | 60 | - | 60 | - | 60 | - | - | - | 137 | - |

As shown in Table 1, fibrillating cellulose fibers (or modified cellulose fibers) in an organic solvent along with an epoxy resin therein, as in Examples 1, 3, 5, 7, 9, 11 and 13, gives a microfibrillated cellulose fiber dispersion excellent in dispersiveness stability in the organic solvent.

Also as shown in Table 1, it is known that the microfibrillated cellulose fiber dispersion in the previous Examples 1, 3, 5, 7, 9, 11 and 13 provides a composite which has good film formability and mold formability and in which the microfibrillated cellulose fibers disperse excellently, as in Examples 2, 4, 6, 8, 10, 12 and 14.

In addition, it has been confirmed that the obtained composite has an excellent coefficient of linear thermal expansion, and further, as compared with Tg (137°C) of the resin itself used therein, the composite has a higher Tg.

Pictures of the films of the cellulose fiber composites obtained in Examples 2 and 8, as photographed through microscopy, are shown in Fig. 1 and Fig. 2, respectively. On the images of Figs. 1 and 2, the areal percentage (%) of the part with no cellulose existing therein in one visual field was calculated. The value in Example 8 was smaller than that in Example 2. This means that the microfibrillated cellulose fibers in the film of Example 8 were more uniformly and wholly dispersed therein.

From the result, it is known that, in the microfibrillated cellulose fiber dispersion obtained by the use of the beads mill in Example 7, microfibrillated cellulose fibers dispersed more uniformly, and that the dispersion gave a cellulose fiber composite where the dispersibility of the microfibrillated cellulose fibers were better.

As opposed to this, in the method of obtaining a composite by immersing an epoxy resin in a cellulose nonwoven fabric in Comparative Example 1, a part of epoxy resin alone was seen in the epoxy resin-containing cellulose nonwoven fabric and around it, in the cross section of the composite obtained, and it could not be said that cellulose fibers uniformly dispersed in the composite.

In addition, another drawback of the method of Comparative Example 1 is that the dispersion was useless for coating, and therefore film formation to give a composite having a desired shape was impossible (film formability: C). Further, the method of Comparative Example 1 has still other problems in that the blend ratio of cellulose fibers to resin is difficult to control and any other component could not be added later. The composite obtained in the method of Comparative Example 1 has a layered structure of a resin layer and a cellulose fiber layer, and therefore, owing to the difference in the coefficient of linear thermal expansion between the layers, the composite has a problem of interlayer peeling in heating.

In case where a composite is produced according to the method of Comparative Example 1, which corresponds to a conventional art, a step of preparing a nonwoven fabric is additionally needed, or that is, the production process in the case is complicated and the productivity is lowered, as compared with the case of producing a composite by the use of the dispersion of the present invention.

For example, Comparative Example 1 is compared with the above-mentioned Examples in point of the time for production for the composites. The production time in Examples is shorter by from about 10 to 30% or so than the production time in Comparative Example, and it is known that the method of using the dispersion of the present invention is favorable from the industrial viewpoint.

In the method of Comparative Example 2, an aqueous dispersion of cellulose fibers is substituted with an epoxy resin. In the method, therefore, the cellulose fibers or the epoxy resin aggregates and the number average fiber diameter of the cellulose fibers in the dispersion increases (in fact, the diameter increased to more than 1000 nm), and the cellulose fibers disperse nonuniformly in the composite.

Further, as in Comparative Example 3, even if an organic solvent is additionally given to the composition containing cellulose fibers and epoxy resin obtained in Comparative Example 2, it is still impossible to obtain the desired dispersion stability.

Further, as in Comparative Example 4, when cellulose fibers are fibrillated in an organic solvent in the absence of an epoxy resin (at least one of a resin and a resin precursor) and, after that, when an epoxy resin is added thereto to prepare a dispersion, then the cellulose fibers aggregate and could hardly mix with the epoxy resin, and therefore a dispersion having sufficient dispersiveness stability could not be obtained. In addition, the dispersion is unsatisfactory in point of the film formability and the dispersibility of the cellulose fibers in the composite.

Also as shown in Comparative Example 5, when cellulose fibers are fibrillated in water in the absence of polyvinyl alcohol and, after that, when polyvinyl alcohol is added thereto to prepare a dispersion, then polyvinyl alcohol could not sufficiently penetrate into the cellulose fibers and the film formability of the resulting dispersion to give composite is also poor.

From these viewpoints, it is obvious that the dispersiveness stability of the microfibrillated cellulose fiber dispersion obtained through the fibrillation step in the production method of the present invention is noticeably excellent.

While the invention has been described in detail and with reference to specific embodiments thereof, it will be apparent to one skilled in the art that various changes and modifications can be made therein without departing from the scope as defined in the claims.

The present application is based on Japanese Patent Application 2010-085357 filed April 1, 2010 and Japanese Patent Application 2010-243046 filed October 29, 2010.

**Claims**

1. A method for producing a cellulose fiber composite, which comprises a composite formation step of subjecting a microfibrillated cellulose fiber dispersion, obtained by a fibrillation step of fibrillating cellulose fibers in a starting material dispersion containing cellulose fibers having a number average fiber diameter from 10 μm to 100 mm, at least one of a resin and a resin precursor, and an organic solvent, to at least one of a heat treatment and photoexposure treatment, to thereby remove the organic solvent and obtain a cellulose fiber composite containing microfibrillated cellulose fibers and a resin.

2. The method for producing a cellulose fiber composite as claimed in claim 1, wherein the cellulose fibers are chemically modified cellulose fibers.

3. The method for producing a cellulose fiber composite as claimed in claim 1 or 2, wherein the at least one of the resin and the resin precursor is selected from a group consisting of a thermoplastic resin, a thermosetting resin and a photocurable resin, and their precursors.

4. The method for producing a cellulose fiber composite as claimed in any one of claims 1 to 3, wherein the at least one of the resin and the resin precursor is at least one of an epoxy resin and its precursor.

5. The method for producing a cellulose fiber composite as claimed in any of claims 1 to 4, wherein at least one of a resin and a resin precursor is further added to the microfibrillated cellulose fiber dispersion.

6. The method for producing a cellulose fiber composite as claimed in any of claims 1 to 5, wherein an organic solvent is added to the microfibrillated cellulose fiber dispersion.

7. The method for producing a cellulose fiber composite as claimed in any one of claims 1 to 6, which further comprises an addition step of adding at least one of a resin and a resin precursor to the microfibrillated cellulose fiber dispersion, prior to the composite formation step.

8. A method for producing a cellulose fiber composite containing microfibrillated cellulose fibers and a resin, which comprises:

   a fibrillation step of fibrillating cellulose fibers in a starting material dispersion containing cellulose fibers having a number average fiber diameter from 10 μm to 100 mm, at least one of a resin and a resin precursor, and a solvent to obtain microfibrillated cellulose fibers, and
   a composite formation step of subjecting the microfibrillated cellulose fibers-containing dispersion to at least one of a heat treatment and photoexposure treatment, to remove the solvent and obtain a cellulose fiber composite containing microfibrillated cellulose fibers and a resin.

**Patentansprüche**

1. Ein Verfahren zur Herstellung eines Zellulosefaserverbundwerkstoffs, welches einen Schritt zur Bildung eines Verbundwerkstoffes umfasst, in dem eine mikrofibrillierte Zellulosefaserdispersion, erhalten durch einen Fibrillationsschritt des Fibrillierens von Zellulosefasern in einer Dispersion eines Ausgangsmaterials, enthaltend Zellulosefasern mit einem Zahlenmittel des Faserdurchmessers von 10 μm bis 100 mm, mindestens eines aus einem Harz und einem Harzvorläufer, und ein organisches Lösungsmittel mindestens eine aus einer Wärmebehandlung und einer Photobelichtungsbehandlung unterzogen werden, umfasst, um dadurch das organische Lösungsmittel zu entfernen und einen Zellulosefaserverbundwerkstoff zu erhalten, welcher mikrofibrillierte Zellulosefasern und ein Harz enthält.

2. Das Verfahren zur Herstellung eines Zellulosefaserverbundwerkstoffs wie in Anspruch 1 beansprucht, wobei die Zellulosefasern chemisch modifizierte Zellulosefasern sind.

3. Das Verfahren zur Herstellung eines Zellulosefaserverbundwerkstoffs wie in Anspruch 1 oder 2 beansprucht, wobei das mindestens eine aus dem Harz und dem Harzvorläufer aus einer Gruppe bestehend aus einem thermoplastischen Harz, einem wärmehärtbaren Harz und einem photohärtbaren Harz und deren Vorläufern ausgewählt ist.

4. Das Verfahren zur Herstellung eines Zellulosefaserverbundwerkstoffs wie in einem der Ansprüche 1 bis 3 beansprucht, wobei das mindestens eine aus dem Harz und dem Harzvorläufer mindestens eines aus Epoxidharz und dessen Vorläufern ist.

5. Das Verfahren zur Herstellung eines Zellulosefaserverbundwerkstoffs wie in einem der Ansprüche 1 bis 4 beansprucht, wobei mindestens eines aus einem Harz und einem Harzvorläufer ferner der mikrofibrillierten Zellulosefaserdispersion zugegeben wird.

6. Das Verfahren zur Herstellung eines Zellulosefaserverbundwerkstoffs wie in einem der Ansprüche 1 bis 5 beansprucht, wobei ein organisches Lösungsmittel der mikrofibrillierten Zellulosefaserdispersion zugegeben wird.

7. Das Verfahren zur Herstellung eines Zellulosefaserverbundwerkstoffs wie in einem der Ansprüche 1 bis 6 beansprucht, welches ferner einen Zugabeschritt des Zugebens von mindestens einem aus einem Harz und einem Harzvorläufer zu der mikrofibrillierten Zellulosefaserdispersion umfasst, vor dem Schritt des Bildens des Verbundwerkstoffes.

8. Ein Verfahren zur Herstellung eines Zellulosefaserverbundwerkstoffs enthaltend mikrofibrillierte Zellulosefasern und ein Harz, welches umfasst:

   einen Fibrillierungsschritt des Fibrillierens von Zellulosefasern in einer Dispersion eines Ausgangsmaterials enthaltend Zellulosefasern mit einem Zahlenmittel des Faserdurchmessers von 10 $\mu$m bis 100 mm, mindestens eines aus einem Harz und einem Harzvorläufer und ein Lösungsmittel, um mikrofibrillierte Zellulosefasern zu erhalten und
   einen Schritt zur Bildung eines Verbundwerkstoffes, in dem die mikrofibrillierte Zellulosefaser enthaltende Dispersion mindestens einer aus einer Wärmebehandlung und einer Photobelichtungsbehandlung unterzogen wird, um dadurch das organische Lösungsmittel zu entfernen und einen Zellulosefaserverbundwerkstoff zu erhalten, welcher mikrofibrillierte Zellulosefasern und ein Harz enthält.

## Revendications

1. Procédé de fabrication d'un composite de fibre de cellulose, qui comprend une étape de formation de composite qui consiste à soumettre une dispersion de fibre de cellulose microfibrillée, obtenue à l'aide d'une étape de fibrillation qui consiste à fibriller des fibres de cellulose dans une dispersion de matériau de départ contenant des fibres de cellulose ayant un diamètre de fibre moyen en nombre compris entre 10 $\mu$m et 100 mm, au moins l'un d'une résine et d'un précurseur de résine, et un solvant organique, à au moins l'un d'un traitement thermique et d'un traitement par photo-exposition, afin d'éliminer le solvant organique et d'obtenir un composite de fibre de cellulose contenant des fibres de cellulose microfibrillées et une résine.

2. Procédé de fabrication d'un composite de fibre de cellulose selon la revendication 1, dans lequel les fibres de cellulose sont des fibres de cellulose modifiées chimiquement.

3. Procédé de fabrication d'un composite de fibre de cellulose selon la revendication 1 ou 2, dans lequel le au moins un de la résine et du précurseur de résine est choisi parmi un groupe consistant en une résine thermoplastique, une résine thermodurcissable et une résine photodurcissable, et leurs précurseurs.

4. Procédé de fabrication d'un composite de fibre de cellulose selon l'une quelconque des revendications 1 à 3, dans lequel le au moins un de la résine et du précurseur de résine est au moins un d'une résine d'époxy et de son précurseur.

5. Procédé de fabrication d'un composite de fibre de cellulose selon l'une quelconque des revendications 1 à 4, dans lequel au moins l'un d'une résine et d'un précurseur de résine est en outre ajouté à la dispersion de fibre de cellulose microfibrillée.

6. Procédé de fabrication d'un composite de fibre de cellulose selon l'une quelconque des revendications 1 à 5, dans lequel un solvant organique est ajouté à la dispersion de fibre de cellulose microfibrillée.

7. Procédé de fabrication d'un composite de fibre de cellulose selon l'une quelconque des revendications 1 à 6, qui comprend en outre une étape d'ajout qui consiste à ajouter au moins l'un d'une résine et d'un précurseur de résine

à la dispersion de fibre de cellulose microfibrillée, avant l'étape de formation du composite.

8. Procédé de fabrication d'un composite de fibre de cellulose contenant des fibres de cellulose microfibrillées et une résine, qui comprend :

une étape de fibrillation qui consiste à fibriller des fibres de cellulose dans une dispersion de matériau de départ contenant des fibres de cellulose ayant un diamètre de fibre moyen en nombre compris entre 10 μm et 100 mm, au moins l'un d'une résine et d'un précurseur de résine, et un solvant afin d'obtenir des fibres de cellulose microfibrillées, et
une étape de formation de composite qui consiste à soumettre la dispersion contenant des fibres de cellulose microfibrillées à au moins l'un d'un traitement thermique et d'un traitement par photo-exposition, afin d'éliminer le solvant et d'obtenir un composite de fibre de cellulose contenant des fibres de cellulose microfibrillées et une résine.

Fig. 1

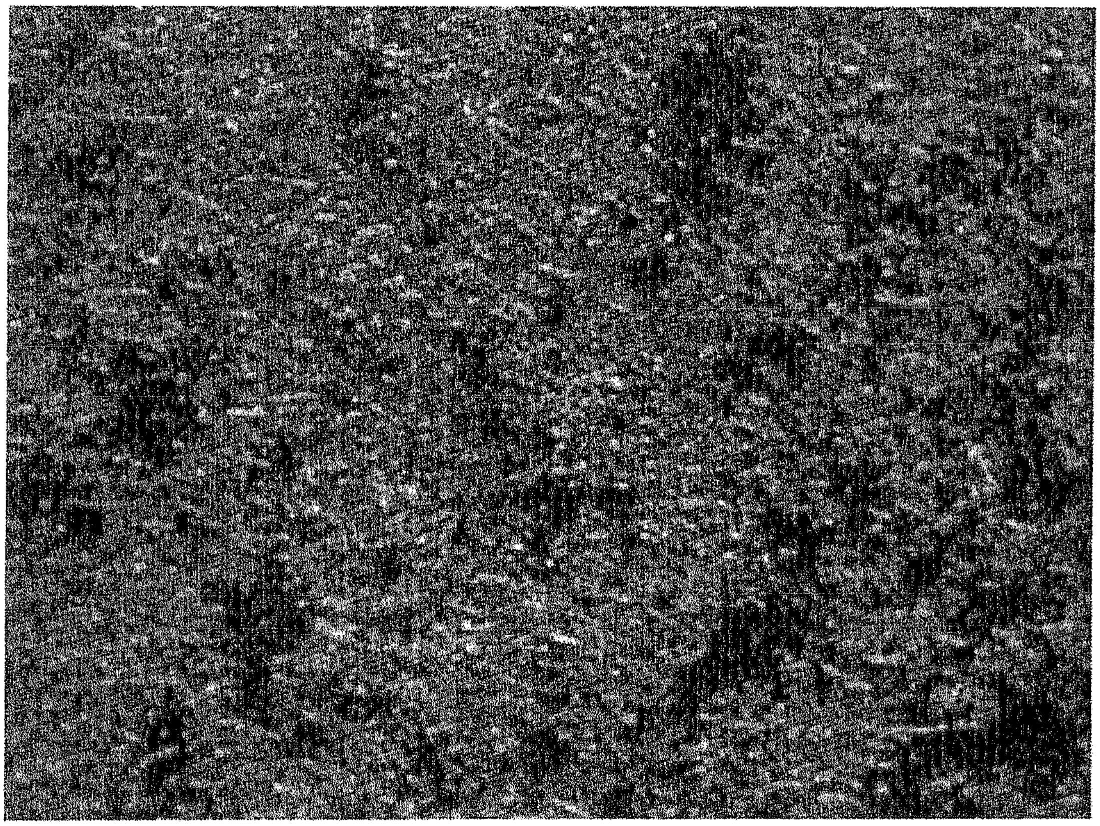

Fig. 2

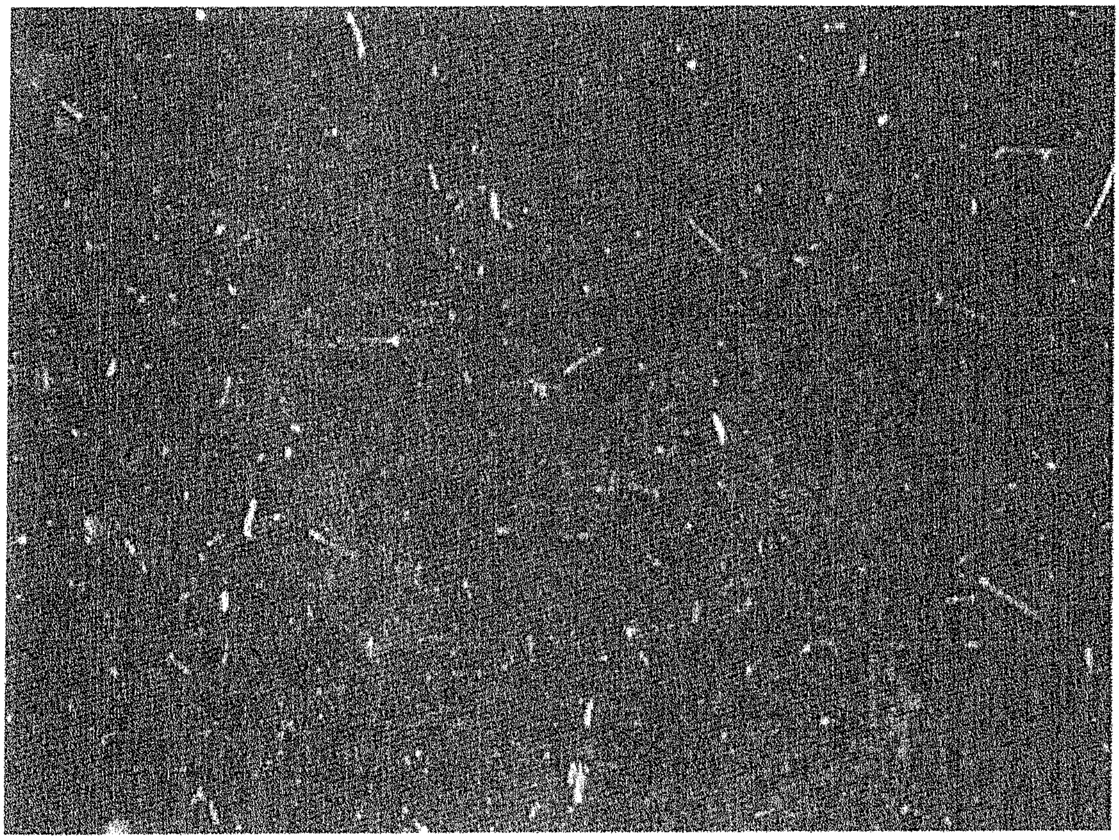

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006316253 A
- JP 2007165357 A
- JP 2008127510 A
- JP 2007146143 A
- JP 2010013604 A
- JP 2010024413 A
- JP 2010085357 A
- JP 2010243046 A